(19) Europäisches Patentamt
European Patent Office
Office européen des brevets

(11) **EP 1 511 802 B1**

(12) **EUROPEAN PATENT SPECIFICATION**

(45) Date of publication and mention
of the grant of the patent:
**08.09.2010  Bulletin 2010/36**

(51) Int Cl.:
***C08K 9/02*** (2006.01)   ***C08K 9/06*** (2006.01)
***C09C 1/04*** (2006.01)

(21) Application number: **03736034.4**

(22) Date of filing: **04.06.2003**

(86) International application number:
**PCT/JP2003/007091**

(87) International publication number:
**WO 2003/104319 (18.12.2003 Gazette 2003/51)**

(54) **POWDER COMPRISING SILICA-COATED ZINC OXIDE, ORGANIC POLYMER COMPOSITION CONTAINING THE POWDER AND SHAPED ARTICLE THEREOF**

PULVER ENTHALTEND MIT KIESELSÄURE BESCHICHTETES ZINKOXID, POLYMERZUSAMMENSETZUNG ENTHALTEND DIESES PULVER SOWIE DARAUS HERGESTELLTE FORMKÖRPER

POUDRE CONTENANT DE L'OXYDE DE ZINC RECOUVERT DE SILICE, COMPOSITION POLYMERE ORGANIQUE RENFERMANT LA POUDRE ET ARTICLE FORME ASSOCIE

(84) Designated Contracting States:
**AT BE BG CH CY CZ DE DK EE ES FI FR GB GR HU IE IT LI LU MC NL PT RO SE SI SK TR**

(30) Priority:  **05.06.2002  JP 2002164865**

(43) Date of publication of application:
**09.03.2005  Bulletin 2005/10**

(73) Proprietor: **Showa Denko K.K.**
**Tokyo 105-8518 (JP)**

(72) Inventors:
• **ISHII, Nobuaki,**
**SHOWA DENKO K.K. R&D CENTER**
**Kawasaki-shi,**
**Kanagawa 210-0858 (JP)**
• **TANAKA, Jun,**
**SHOWA DENKOK.K. R&D CENTER**
**Chiba-shi,**
**Chiba 267-0056 (JP)**

• **AOYAGI, Hikaru,**
**SHOWA DENKO K.K.**
**Kanagawa 210-0858 (JP)**

(74) Representative: **Strehl Schübel-Hopf & Partner**
**Maximilianstrasse 54**
**80538 München (DE)**

(56) References cited:
**WO-A-02/22098     US-A1- 2002 041 853**

• **PATENT ABSTRACTS OF JAPAN vol. 1999, no. 12, 29 October 1999 (1999-10-29) -& JP 11 193354 A (FUJI SHIKISO KK), 21 July 1999 (1999-07-21)**
• **DATABASE WPI Section Ch, Week 200121 Derwent Publications Ltd., London, GB; Class D21, AN 2001-204991 XP002252811 -& JP 2000 319128 A (FUJI SHIKISO KK), 21 November 2000 (2000-11-21)**

**Description**

The present invention relates to zinc oxide employed in organic polymer compositions, rubber products, paper, cosmetics, paints, printing ink, etc., and more particularly to powder containing silica-coated zinc oxide particles having a smaller number of large particles, to organic polymer compositions containing such powder, and to shaped products formed from the compositions.

BACKGROUND ART

Zinc oxide, also called zinc flower, has long been known as a white pigment. Zinc oxide is endowed with the following optical properties: When zinc oxide is reduced to fine particles having a diameter approximately half the wavelength of visible light, the particles allow visible light to pass therethrough, because the scattering effect of the zinc oxide particles deteriorates considerably, and selectively absorb ultraviolet rays by virtue of the excellent ultraviolet absorbing effect of zinc oxide.

In relation to ultraviolet absorbers making use of such zinc oxide particles, Japanese Patent Application Laid-Open (*kokai*) No. 5-171130 discloses a resin molded product in which zinc oxide fine powder having a particle size of 0.1 $\mu$m or less is incorporated into a transparent resin. Japanese Patent Application Laid-Open (*kokai*) Nos. 5-295141 and 11-302015 disclose zinc oxide fine particles which are coated with a silicon-containing compound in order to prevent possible impairment of weather resistance of products containing the fine particles which would otherwise be attributable to the photocatalytic action of zinc oxide and to improve the dispersibility of the fine particles in a resin.

Japanese Patent No. 2501663 (International Publication WO90/06974) discloses a method of encapsulating a zinc oxide composition for pigment use in a shell formed by causing water-insoluble metallic soap to be deposited on the pigment. The method includes the steps of adding, to a slurry of the pigment-use zinc oxide composition, a water-soluble alkali metal salt of saturated or unsaturated monocarboxylic acid having 7 to 22 carbon atoms, and a water-soluble metal salt composed of a cation moiety of metal selected from among groups IB, II, III, IV, V, VIB, VIIB, and VIII of the periodic table and an inorganic anion moiety selected from a nitrate ion, a sulfate ion and a halogen ion, whereby in situ formation and deposition of water-insoluble metallic soap of the mentioned saturated or unsaturated monocarboxylic acid is achieved.

Meanwhile, methods using a solvent (such as water or an organic solvent) in surface treatment require steps including filtration and drying for the solvent and, therefore, maldistribution of the surface treatment agent that is deposited during drying or coalescence of powder particles tends to occur. Thus, this method is accompanied by a shortcoming that good dispersion of the coated zinc oxide particles is difficult to attain.

In uses related to apparel and packaging materials, transparency, weather resistance, flexibility, or like properties are frequently demanded and, in such cases, demand has arisen for thin films or thin fibers having a high level of UV shielding ability.

Conventional zinc oxide particles are not satisfactory in terms of photocatalytic effect or an effect preventing release of zinc ions, and this is true even in the case of surface-treated zinc oxide particles, because the surface treatment is insufficient. Thus, in such conventional zinc oxide particles, degradation of organic materials cannot be avoided and the durability of resultant products is low, in practice.

For example, as polyesters and polyamides are molded and processed at high temperature, use of organic UV absorbers therewith is difficult. A conceivable approach to avoid this problem is use of, as an inorganic UV absorber, zinc oxide particles. However, the mentioned resins readily decompose, and in addition, are endowed with properties that permit degradation as a result of interaction with zinc ions, so that providing practical, durable compositions is difficult.

Also, in cases where fibers obtained by spinning a composition containing conventional zinc oxide particles are dyed, there arises another problem in that release of zinc ions into the dye solution cannot be avoided.

Moreover, since conventional coated zinc oxide particles permit the co-presence of large particles, processing of a resin composition containing such conventional particles involves the following problems: in formation of thin fibers such as multifilaments, breakage of thread frequently occurs; in the formation of a very thin inflation film, puncture occurs; and in tape formation, the stretch factor is limited.

The present invention is directed to provision of a powder containing finely divided, specific silica-coated zinc oxide particles containing a smaller number of large particles which ensure facilitated shaping of thin film, thin fiber, or similar products which are free from impaired weather resistance which would otherwise be attributable to photocatalytic action and which are endowed with sufficient UV shielding ability; organic polymer compositions containing such powder; and shaped products formed from the compositions.

Furthermore, the present invention is directed to provision of the powder, organic polymer compositions comprising such powder; and shaped products formed from the compositions, which are free from a bleed-out phenomenon, unlike an organic UV absorber, and have good durability against washing.

SUMMARY OF THE INVENTION

The present inventors have carried out extensive research in an attempt to attain the above objectives, and have found that use of silica-coated zinc oxide powder containing a smaller number of large particles; specifically, use of such a powder in which large particles having a size of 5 $\mu$m or more are contained in an amount of 0.1% by mass or less wherein the number of large particles has been reduced by a dry-format classification, in combination with a thermoplastic resin enables facilitated shaping of thin film, thin fiber, or similar products which are free from impaired weather resistance, which would otherwise be attributable to photocatalytic action, and which are endowed with sufficient UV shielding ability, leading to completion of the present invention.

Accordingly, the present invention comprises the following:

(1) A powder comprising silica-coated zinc oxide fine particles in which the surface of each particle is coated with silica, wherein large particles of 5 $\mu$m or more account for 0.1 mass% or less.

(2) A powder comprising surface-hydrophobicized silica-coated zinc oxide fine particles in which the silica-coated zinc oxide fine particles, whose surfaces have been coated with silica, are further treated with a hydrophobicity-imparting agent, wherein large particles of 5 $\mu$m or more account for 0.1 mass% or less.

(3) The powder as recited in (2), wherein the hydrophobicity-imparting agent is one or more members selected from the group consisting of silicone oils, alkoxysilanes, silane coupling agents, and higher fatty acid salts.

(4) The powder as recited in any of (1) to (3), wherein the silica-coated zinc oxide fine particles have silica coating of 0.5 to 100 nm in thickness.

(5) The powder as recited in any of (1) to (4), wherein the silica-coated zinc oxide fine particles have an average primary particle size of 1 to 200 nm.

(6) The powder as recited in (2) or (3), wherein the surface-hydrophobicized, silica-coated zinc oxide fine particles have an average primary particle size of 5 to 120 nm and a silica-film thickness of 0.5 to 25 nm.

(7) The powder as recited in any of (1) to (6), wherein ratio I of infrared absorption peak intensity of silica film of the silica-coated zinc oxide fine particles at 1150 to 1250 cm$^{-1}$ to that at 1000 to 1100 cm$^{-1}$ as determined on an infrared absorption spectrum is 0.2 or more (I=I1/I2; wherein I1 denotes absorption peak intensity at 1150 to 1250 cm$^{-1}$ and I2 denotes absorption peak intensity at 1000 to 1100 cm$^{-1}$), and the silica film has a refractive index of 1.435 or more.

(8) The powder as recited in any of (1) to (7), wherein the powder exhibits a photocatalytic activity of 60 Pa/min or less as measured through the tetralin auto-oxidation method.

(9) The powder as recited in any of (1) to (8), wherein the powder exhibits a dye color fading rate ($\Delta ABS_{490}$/hour) of 0.1 or less as measured through the sunset yellow method.

(10) The powder as recited in any of (1) to (9), wherein the powder exhibits an organic UV absorber decomposition rate ($\Delta ABS_{340}$/hour) of 0.01 or less as measured through the Parasol method.

(11) The powder as recited in any of (1) to (10), wherein the powder exhibits a percent organic UV absorber decomposition of 5% or less as measured through the ethylhexyl p-methoxycinnamate method.

(12) The powder comprising silica-coated zinc oxide fine particles as recited in any one of (1) to (11), which includes titanium oxide.

(13) The powder comprising silica-coated zinc oxide fine particles as recited in (12), wherein titanium oxide in an amount of 2 parts by mass to 5 parts by mass is further included based on zinc oxide at 10 parts by mass.

(14) The powder comprising silica-coated zinc oxide fine particles as recited in (12) or (13), wherein at least one part of titanium oxide is coated with silica.

(15) The powder comprising silica-coated zinc oxide fine particles as recited in any one of (12) to (14), wherein the titanium oxide contains mixed crystal having a titanium-oxygen-silicon bond in its primary particles.

(16) The powder comprising silica-coated zinc oxide fine particles as recited in (15), wherein when the BET specific surface area of titanium oxide is represented by "A m$^2$/g" and the SiO$_2$ content is represented by "B mass%", the ratio of B/A is 0.02 to 0.5.

(17) The powder comprising silica-coated zinc oxide fine particles as recited in (15) or (16), wherein BET specific surface area of the titanium oxide is 10 to 200 m$^2$/g.

(18) The powder comprising silica-coated zinc oxide fine particles as recited in any one of (15) to (17), wherein the average primary particle size of titanium oxide is 0.008 $\mu$m to 0.15 $\mu$m.

(19) The powder comprising silica-coated zinc oxide fine particles as recited in any one of (15) to (18), wherein the titanium oxide has core (a nucleus)/ shell (a husk) structure, wherein the core is a TiO$_2$-rich structure and the shell is an SiO$_2$-rich structure.

(20) An organic polymer composition containing a powder comprising silica-coated zinc oxide fine particles as recited in any one of (1) to (19), and a thermoplastic resin.

(21) An organic polymer composition consisting essentially of a powder comprising silica-coated zinc oxide fine particles as recited in any one of (1·) to (19), and a thermoplastic resin.

(22) The organic polymer composition as recited in (20) or (21), wherein the thermoplastic resin is selected from the group consisting of polyethylenes, polypropylenes, polystyrenes, polyamides, polyesters, and polycarbonates.

(23) A shape-imparted product of an organic polymer composition as recited in any one of (20) to (22).

(24) The shape-imparted product as recited in (23), which is selected from the group consisting of fibers, yarns, films, tapes, hollow products, and multi-layer structures.

(25) An object comprising a shape-imparted product as recited in (23) or (24) and selected from the group consisting of building materials for interior furnishings and exterior finish, machinery, exterior and interior decor materials for automobiles, glass products, electric appliances, agricultural materials, electronic apparatus, tools, tableware, bath products, toiletry products, furniture, clothing, woven fabrics, non-woven fabrics, cloth products, leather products, paper products, sporting goods, futon, containers, eyeglasses, signboards, piping, wiring, brackets, sanitary materials, automobile parts, outdoor goods such as tents, panty hose, socks, gloves, and masks.

(26) The cosmetic material including the powder comprising silica-coated zinc oxide fine particles as recited in any one of (1) to (19).

## MODES FOR CARRYING OUT THE INVENTION

The ZnO-containing powder of the present invention is preferably a powder, containing silica-coated zinc oxide fine particles whose surfaces are coated with silica, in which large particles having a size of 5 $\mu$m or more are present in an amount of 0.1% by mass or less. Another type of a preferred powder according to the present invention is a powder containing surface-hydrophobicized silica-coated zinc oxide fine particles in which the silica-coated zinc oxide fine particles whose surfaces have been coated with silica are further treated with a hydrophobicity-imparting agent, wherein large particles of 5 $\mu$m or more account for 0.1 mass% or less.

A process for producing the powder of the present invention will next be described in detail.

No limitation is imposed on the process for producing the starting material of the powder of the present invention containing silica-coated zinc oxide; i.e., silica-coated zinc oxide fine particles whose surfaces are coated with silica. An exemplary method that may be employed is disclosed in International Publication WO98/47476 (hereinafter may be referred to as "the present method".)

Specifically, the production process of the silica-coated zinc oxide fine particles according to the present method includes a step of bringing a specific composition for forming silica coating into contact with raw material zinc oxide particles whose primary particles have an average particle size of 5 nm to 200 nm, wherein the composition for forming silica coating contains at least the following components:

1) silicic acid containing neither an organic group nor a halogen, or a precursor capable of producing such silicic acid,
2) water,
3) an alkali, and
4) an organic solvent,

and preferably the water/organic solvent ratio by volume falls within a range of 0.1 to 10, and the silicon content falls within a range of 0.0001 to 5 mol/L, whereby surfaces of the zinc oxide particles are selectively coated with a dense silica coating and subjecting the obtained silica-coated zinc oxide particles to dry-format classification to reduce the number of large particles. The thus-formed silica film satisfactorily covers complicated surfaces of the base material; i.e., zinc oxide particles, and, even when the thickness of the film is as thin as 0.5 nm, excellent coverage and high shielding against photocatalytic activity can be ensured. In addition, as a silica coating having an extremely low alkali metal content can be realized, even under high-temperature high-humidity conditions, the silica film does not suffer the problem of dissolving to thereby affect the properties of silica-coated zinc oxide.

Within the context of the present method, the silicic acid to be used for preparing a composition for forming silica film collectively refers to orthosilicic acid and its polymers such as metasilicic acid, mesosilicic acid, mesotrisilicic acid, and mesotetrasilicic acid. These are described, for example, in Encyclopaedia Chimica (Kyoritsu Shuppan K.K., published on March 15, 1969, seventh print) under the heading "silicic acid." The silicic acid contains neither an organic group nor a halogen.

The silicic acid to be employed in the present method may be obtained by adding water, an alkali, and an organic solvent to tetraalkoxysilane ($Si(OR)_4$, wherein R is a hydrocarbon group, in particular a C1-C6 aliphatic group); more specifically, to a precursor capable of producing silicic acid, such as tetramethoxysilane, tetraethoxysilane, tetra-n-propoxysilane, tetraisopropoxysilane, or tetra-n-butoxysilane; and the mixture is stirred to thereby cause hydrolysis. This method is advantageous in that handling and operation are easy and practical. Of the mentioned materials, tetramethoxysilane is preferred.

In this connection, compounds represented by the following formula:

$X_nSi(OH)_{4-n}$

(wherein X denotes a hydrocarbon group, a halogen, or hydrogen; and n is an integer of 1, 2, or 3), which have a hydrophobic moiety such as a hydrocarbon group, a halogen, or hydrogen, do not fall within the definition of the precursor capable of producing silicic acid. Therefore, trialkoxyalkylsilane, dialkoxyalkyldialkylsilane, trialkoxysilane, dialkoxysilane, and analogous substances are not suitable precursors for the purposes of the present invention.

Alternative methods for producing a composition containing silicic acid include: addition of water, an alkali, and an organic solvent to tetrahalosilane for hydrolysis; addition of an alkali and an organic solvent to water glass; and application of water glass onto cation exchange resin, followed by addition of an alkali and an organic solvent. No particular limitation is imposed on tetraalkoxysilane, tetrahalosilane, and water glass, which serve as the raw materials for preparing silicic acid, and those which are widely used for industrial purposes or as reagents may be employed. However, higher purity is more preferred. According to the present invention, the composition for forming a silica coating may contain unreacted substances remaining from the raw materials for producing silicic acid.

No particular limitation is imposed on the amount of the silica contained in the composition for forming silica coating. Preferably, the silicon content is 0.0001 to 5 mol/L, more preferably 0.001 to 5 mol/L. Silicon contents of lower than 0.0001 mol/L are not practical, because the silica film formation rate will be too slow, whereas silicon contents exceeding 5 mol/L are detrimental, because silica particles may be generated in the composition, without forming silica film.

The silicon content can be calculated on the basis of the amount of a raw material (e.g., tetraethoxysilane) for producing silicic acid. Alternatively, the silicon content may be determined through atomic absorption spectroscopy of the resultant composition for forming silica coating. In the analysis, the analysis target may be a spectrum of silicon at a wavelength of 251.6 nm, and a flame of acetylene/dinitrogen oxide may be employed.

No particular limitation is imposed on water to be employed for preparing the composition for forming silica film. However, if foreign matter is present in water, it may migrate into the final products as an impurity, and therefore, such foreign particles are preferably removed beforehand through, for example, filtration.

The water which is employed for producing the composition for forming silica coating is preferably used at a water/organic solvent ratio (by volume) of 0.1 to 10. If the water/organic solvent ratio (by volume) falls outside this range, a film cannot be formed, or the film formation rate drops significantly. A more preferred range for the water/organic solvent ratio (by volume) is 0.1 to 0.5. So long as the water/organic solvent ratio (by volume) falls within this range of 0.1 to 0.5, no particular limitation is imposed on the species of the alkali to be employed. However, if the water/organic solvent ratio (by volume) is 0.5 or more, film formation is preferably carried out by use of an alkali containing no alkali metal; for example, by use of ammonia, ammonium hydrogencarbonate, or ammonium carbonate.

In the present method, examples of the alkali used in the composition for forming silica film include, but are not limited to, inorganic alkalis such as ammonia, sodium hydroxide, and potassium hydroxide; inorganic alkali salts such as ammonium carbonate, ammonium hydrogencarbonate, sodium carbonate, and sodium hydrogencarbonate; organic alkalis such as monomethylamine, dimethylamine, trimethylamine, monoethylamine, diethylamine, triethylamine, pyridine, aniline, choline, tetramethylammonium hydroxide, and guanidine; and organic alkali salts such as ammonium formate, ammonium acetate, monomethylammonium formate, dimethylammonium acetate, pyridin lactate, guanidinoacetic acid, and anilin acetate.

Of the above compounds, the following compounds are particularly preferred from the viewpoint of better regulation of reaction rate: ammonia, ammonium carbonate, ammonium hydrogencarbonate, ammonium formate, ammonium acetate, sodium carbonate, sodium hydrogencarbonate, etc. In the composition for forming a silica film, one or more alkali species selected from among the above group may be used in combination.

In the present method, no particular limitation is imposed on the purity of the alkali. Although purity levels widely accepted for industrial uses or as reagents are applicable, a higher purity is more preferred.

An effective way of increasing the silica coating formation rate is to raise the temperature at which the film is formed. In this case, the alkali and the organic solvent are preferably chosen from among species that are not easily volatilized or decomposed at the film formation temperature.

In the present method, a very small amount of alkali may suffice for forming a film and, thus, in the case where sodium carbonate is employed as the alkali, film can be formed by addition of an amount as small as 0.002 mol/L. Of course, a large amount; for example, as large as 1 mol/L, of sodium carbonate may be added. However, addition of a solid alkali in a large amount that exceeds the solubility limit is not preferred, because the alkali would migrate as an impurity into the metal oxide powder.

Through use of an alkali which does not contain an alkali metal as a primary component, there can be created silica-coated metal oxide particles having a low alkali metal content. From the viewpoints of film formation rate and readily removal of residue, the most preferred of these are ammonia, ammonium carbonate, and ammonium hydrogencarbonate.

In the present invention, preferably, the organic solvent contained in a composition for forming silica coating is selected from among those capable of forming a homogeneous solution of the composition. Examples of such organic solvents include alcohols such as methanol, ethanol, propanol, and pentanol; ethers/acetals such as tetrahydrofuran and 1,4-dioxane; aldehydes such as acetaldehyde; ketones such as acetone, diacetone alcohol, and methyl ethyl ketone; and polyhydric alcohol derivatives such as ethylene glycol, propylene glycol, and diethylene glycol. Of these solvents, alcohols are preferred and ethanol is more preferred, from the viewpoint of ease of regulating the reaction rate. As the organic solvent, one species may be chosen, or two or more species may be chosen for use as a mixture.

No particular limitation is imposed on the purity of the organic solvent to be contained in the composition for forming silica coating, and organic solvents which are widely used for industrial purposes or as reagents may be employed. However, a higher purity is more preferred.

The composition for forming a silica coating can be prepared through a generally performed solution preparation method. For example, predetermined amounts of an alkali and water are added to an organic solvent, and after stirring, tetraethoxysilane is added, followed by further stirring. The sequential order of addition may be changed, and regardless of the order of addition, coating can be satisfactorily formed. From the viewpoint of control of reaction, upon mixing water and tetraethoxysilane, both are preferably diluted with an organic solvent.

The thus-prepared composition for forming a silica coating is a stable composition, and until it is brought into contact with metal oxide particles such as zinc oxide particles, substantially no coating or deposition occurs. When the composition contacts metal oxide particles, silica is selectively deposited on the surfaces of the metal oxide particles, to thereby form silica coating. As used herein, the word "selectively" is used to refer to the case where film formation proceeds as silica is deposited on the surfaces of the metal oxide, without inducing formation of silica particles occurring in association with uniform nucleus formation in a solution, whereby stoichiometrical control of silica film thickness and the silica content of the silica-coated metal oxide is possible.

No particular limitation is imposed on the method of producing zinc oxide which serves as the raw material of the silica-coated zinc oxide fine particles, and any appropriate method may be used. Thus, there may be employed zinc oxide obtained through evaporation oxidation of crude electrolyzed zinc bar; zinc hydroxide obtained by neutralizing an aqueous solution of a water-soluble salt such as zinc sulfate or zinc chloride; fired products obtained through firing zinc carbinate, zinc sulfate, or zinc oxalate; or mixtures of any of these. Other types of zinc oxide which may be employed include zinc oxide doped with a hetero-element such as Fe, Co, Al, Sn, or Sb; and mixed crystal oxides or complex oxides containing zinc oxide as a primary component, and also containing crystalline or non-crystalline oxide of an element selected from among Si, Al, Fe, Co, Zr, Ce, Sn, Sb, and like elements. A zinc oxide which forms little aggregation is preferred from the viewpoint of control of secondary particle size.

The average primary particle size of zinc oxide particles which serve as raw material in the present method is preferably 1 nm to 200 nm, more preferably 5 nm to 120 nm. The average secondary particle size is preferably 0.5 $\mu$m or less.

According to the present method, zinc oxide particles serving as a starting material are immersed in a composition for forming silica coating, and the resultant system is maintained at a predetermined temperature, whereby the surfaces of the zinc oxide particles are selectively coated with silica, resulting in formation of silica coating. Specifically, the silica coating may be formed through a method in which, firstly, a composition for forming silica coating is prepared and, then, zinc oxide particles serving as a starting material are supplied for forming silica coating; or alternatively, zinc oxide particles serving as a starting material are suspended in a solvent in advance and, subsequently, other starting materials are added to thereby form a composition for forming silica coating, and then a silica coating is formed. That is, no particular limitation is imposed on the starting materials of the coating composition or on the sequential order in which the starting zinc oxide particles are added; a silica coating can be formed regardless of the order of addition.

In particular, a preferred method is performed in such a manner that firstly a suspension containing starting zinc oxide particles, water, an organic solvent, and an alkali is prepared, and then tetraalkoxysilane diluted with an organic solvent is added dropwise at a constant rate of addition. This process enables provision of silica coating of improved density, resulting in realization of a continuous step which is industrially beneficial.

Growth of silica film proceeds on the basis of the selective deposition of silica on the surfaces of zinc oxide particles. Therefore, the longer the film formation time, the thicker the film thickness. Of course, if silicic acid contained in the film forming composition is mostly consumed for forming coatings, the film forming rate decreases. However, by sequentially adding silicic acid in consumed amounts, silica coating can be formed continuously at a practical speed. Particularly through the process including the steps of maintaining starting zinc oxide particles in a coating composition to which a certain amount of silicic acid has been added, the amount corresponding to a silica coating thickness of interest; forming silica coating to thereby consume silicic acid; removing the produced silica-coated zinc-oxide fine particles to the outside of the system; and adding silicic acid in an amount corresponding to the consumed amount is added, the composition can again be used in the subsequent coating step for the starting zinc oxide particles, attaining a continuous process which is very economical and highly productive.

For example, in the case where tetraalkoxysilane diluted with an organic solvent is added dropwise at a constant rate to a suspension containing starting zinc oxide particles, water, and an organic solvent, complete consumption of tetraalkoxysilane and formation of dense silica coating having a film thickness of interest can be attained by using tetraalkoxysilane in an amount corresponding to the silica coating thickness of interest and diluting it with an organic solvent, and the resultant solution is added dropwise at a constant rate that is commensurate with the hydrolysis rate. Subsequently, the generated silica-coated zinc oxide fine particles are taken out of the reaction system, yielding a product of high purity in which virtually no unreacted tetraalkoxysilane remains. Needless to say, the solvent from which the silica-coated zinc oxide fine particles has been removed can be used again in a recycling manner for the next run of film formation, to thereby realize an economical, highly productive process.

No particular limitation is imposed on the temperature at which silica coating is formed; the temperature is preferably 10-100°C, more preferably 20-50°C. The higher the temperature, the higher the film formation speed. However, when the temperature is excessively high, components of the composition evaporate, and the compositional proportions of the solution cannot be maintained, whereas when the temperature is excessively low, the film formation speed is impractically low.

The pH of the composition for forming silica coating should be alkaline during film formation, in order to attain a satisfactory density of coating. As the solubility of zinc oxide may vary in a pH-dependent manner, the pH of the composition for forming a silica coating is preferably controlled by modifying the amount of the alkali added. However, in such a case, as the amount of alkali changes, the hydrolysis rate of tetraalkoxysilane or a similar material varies, and therefore, film formation temperature or water content of the coating composition must be regulated so that an appropriate hydrolysis rate is attained.

After the zinc oxide particles are coated with silica, liquid/solid separation is performed, whereby silica-coated zinc oxide fine particles can be isolated. Isolation may be effected through a customary separation method, such as filtration, centrifugal sedimentation, or centrifugal separation.

After the step of solid/liquid separation, a drying step is performed, whereby silica-coated zinc oxide fine particles having a low water content are produced. Drying may be performed through a conventional drying method, such as natural drying, hot-air application, vacuum drying, or spray drying. Firing of the silica-coated zinc oxide fine particles is not particularly required. However, they may be used after firing.

The silica coating of the silica-coated zinc oxide fine particles produced through the present method has dense coating, and thus is advantageous for use in practice. Within the context of the present invention, the term "dense" means that the formed silica film has high density and is uniform without pinholes or cracks. The term "practical" means that strong bonding (-Si-O-Zn-bonding) between silica and zinc oxide (serving as a substrate) prevents defoliation of the coating or a like phenomenon, whereby the physical properties of silica-coated zinc oxide tend to be consistent.

The silica-coated zinc oxide fine particles produced through the present method are preferably surface-hydrophobicized silica-coated zinc oxide fine particles obtained through subjecting the particles to surface treatment with a hydrophobicity-imparting agent.

The surface treatment of silica-coated zinc oxide fine particles with a hydrophobicity-imparting agent may be performed by use of a known method. In the present method, silica-coated zinc oxide particles may be directly hydrophobicized by use of the dry method or the spray method. The dry method may proceed as follows: To silica-coated untrafine mixed crystal oxide particles which are being stirred in a mixing device (such as a V-shape mixer or a Henschel mixer), a hydrophobicity-imparting agent or an organic solution of a hydrophobicity-imparting agent is added by way of spraying or similar means, and mixing is further performed to thereby allow the agent to deposited onto the surfaces of the powder particles. The resultant particles are dried and, when necessary, heat may be applied to strengthen the bonding. Alternatively, when a spray method is employed, a hydrophobicity-imparting agent or a solution of a hydrophobicity-imparting agent is sprayed onto silica-coated zinc oxide particles heated to high temperature, whereby the surface coating can be effected.

According to the wet method, silica-coated ultrafine mixed crystal oxide is dispersed in water or an organic solvent, or in a mixture of water and an organic solvent, and to the resultant dispersion, a hydrophobicity-imparting agent (or a solution containing a hydrophobicity-imparting agent) and a reaction catalyst are added, followed by stirring and then surface treatment. In this case, if a drying step is performed after solid/liquid separation, surface-hydrophobicized silica-coated zinc oxide fine powder can be obtained. Drying may be performed through a conventional drying method, such as natural drying, hot-air application, vacuum drying, or spray drying.

As the above-described silica-coated zinc oxide fine powder or surface-hydrophobicized silica-coated zinc oxide fine powder undergoes cohesion of particles during the process of drying or firing, a step for reducing large particles must be performed. In order to reduce the number of large particles, a dry-format classification is used. For example, precision classification can be carried out by use of a turbo-classifier produced by Nisshin Engineering K.K. or similar means. Intensive milling attained by use of a jet mill may be effective for reducing the level of aggregation of particles. However, such intensive milling may cause partial breakage of silica coating or create new surfaces (i.e., zinc oxide surfaces) as a result of milling of surface-treated products of large zinc oxide particles. These are not preferred because processability and weather resistance of organic polymer composition containing such intensively milled particles are deteriorated. A wet-format stationary classification employing a solvent is not preferred, either, because of possible re-aggregation which may arise during a solid/liquid separation step or a drying step after classification.

Examples of the hydrophobicity-imparting agent used in the present method include, but are not limited to, higher fatty acids such as waxes, higher fatty acid triglycerides, higher fatty acids, higher fatty acid polyvalent metal salts, and polyvalent metal higher fatty sulfate salts; higher alcohols or derivatives thereof; organic fluorine compounds such as perfluorinated or partial-fluorinated higher fatty acids and higher alcohols; and organic silicon compounds such as silicone oils, organic alkoxysilanes, organic chlorosilanes, and silazanes. Among them, higher fatty acid polyvalent metal salts, silicone oils, silane coupling agents, and alkoxysilanes are preferably employed.

Examples of the silicone oils used in the present method include, but are not limited to, dimethylpolysiloxanes, methylhydrogenpolysiloxanes, methylphenylpolysiloxanes, and cyclic polydimethylsiloxanes. Alternatively, modified silicone oils such as alkyl-modified, polyether-modified, amino-modified, mercapto-modified, epoxy-modified, and fluorine-modified silicone oils may also be employed.

Examples of the chlorosilanes used in the present method include, but are not limited to, trimethylchlorosilane, dimethyldichlorosilane, methyltrichlorosilane, methyldichlorosilane, dimethylvinylchlorosilane, methylvinyldichlorosilane, triphenylchlorosilane, methyldiphenylchlorosilane, diphenyldichlorosilane, methylphenyldichlorosilane, and phenyltrichlorosilane.

Examples of the silazanes used in the present method include, but are not limited to, hexamethyldisilazane, N,N'-bis(trimethylsilyl)urea, N-trimethylsilylacetamide, dimethyltrimethylsilylamine, diethyltrimethylsilylamine, and trimethylsilylimidazole.

Examples of the organic alkoxysilanes used in the present method include, but are not limited to, silane coupling agents such as vinyltrichlorosilane, vinyltris(β-methoxyethoxy)silane, vinyltrimethoxysilane, vinyltriethoxysilane, γ-(methacryloyloxypropyl)trimethoxysilane, β-(3,4-epoxycyclohexyl)ethyltrimethoxysilane, γ-glycidyloxypropyltrimethoxysilane, γ-glycidoxypropylmethyldiethoxysilane, N-β(aminoethyl)γ-aminopropyltrimethoxysilane, N-β(aminoethyl)γ-aminopropylmethyldiethoxysilane, γ-aminopropyltriethoxysilane, N-phenyl-γ-aminopropyltrimethoxysilane, γ-mercaptopropyltrimethoxysilane, and γ-chloropropyltrimethoxysilane; methyltrimethoxysilane; dimethyldimethoxysilane; trimethylmethoxysilane; methyltriethoxysilane; dimethyldiethoxysilane; trimethylethoxysilane; methyldimethoxysilane; methyldiethoxysilane; dimethylethoxysilane; dimethylvinylmethoxysilane; dimethylvinylethoxysilane; phenyltrimethoxysilane; phenyltriethoxysilane; diphenyldimethoxysilane; and diphenyldiethoxysilane. Alternatively, alkoxysilanes having a perfluorinated or partial-fluorinated alkyl group may also be used.

In particular, alkoxysilanes represented by the following formula are preferably used:

$$\text{Formula: } R^1(R^2_n)SiX_{3-n}$$

(wherein $R^1$ is a C1-C4 alkyl or phenyl, $R^2$ is hydrogen, a C1-C4 alkyl or phenyl, X is a C1-C4 alkoxyl, and n is an integer of 0 to 2).

The coating amount of the hydrophobicity-imparting agent is equal to or greater than the minimum coating amount required for the hydrophobicity-imparting agent to achieve complete coverage over the surfaces of the silica-coated zinc oxide particles serving as raw material. This amount is calculated from the following equation.

$$\text{Minimum coating amount (g) =}$$
$$\{\text{Mass of the silica-coated ultrafine mixed crystal oxide}$$
$$\text{(g)}\} \times \{\text{Specific surface area (m}^2\text{/g)}\} \div \{\text{minimum area}$$
$$\text{covered by the hydrophobicity-imparting agent (m}^2\text{)}\}$$

Use of excessive amounts of the hydrophobicity-imparting agent permits deposition of the agent on portions other than the surfaces of the silica-coated ultrafine mixed crystal oxide particles, and thus is not economical. Although the amount is not universally determined, because it varies depending on the molecular weight of the hydrophobicity-imparting agent and the specific surface area of the silica-coated untrafine mixed crystal oxide particles, in general, the amount preferably falls within a range of 0.1 to 30 mass% inclusive, more preferably 1 to 20 mass% inclusive. Both ranges of less than 0.1 mass% and those more than 30 mass% are not preferred, because in the former case sufficient hydrophobicity cannot be obtained, and in the latter case, although sufficient hydrophobicity can be obtained, a UV shielding effect is lowered because of reduction in the amount of zinc oxide per unit weight of particles.

The thickness of the silica coating of the silica-coated zinc oxide fine particles which are used in the present method is 0.5 to 100 nm, preferably 1.0 to 50 nm, more preferably 1.5 to 25 nm. Silica coating thicknesses of less than 0.5 nm cannot provide satisfactory shielding against photocatalytic action and, in addition, there may be cases where stable organic polymer compositions, shape-imparted products, or structures fail to be obtained. Also, silica coating thicknesses in excess of 100 nm are not preferred, because there may be cases where the resultant organic polymer compositions, shape-imparted products, or structures fail to be endowed with sufficient UV shielding ability. In this connection, the thickness of silica coating is determined on the basis of images obtained through transmission electron microscopy.

The silica-coated zinc oxide fine particles which are used in the present method have an average primary particle size of 1 to 200 nm, preferably 5 to 120 nm. Average primary particle sizes falling outside the above respective ranges are less preferred, in view that they involve an increased tendency of failure in obtaining organic polymer compositions, shape-imparted products, or structures having high UV shielding ability.

As used herein, the "primary particles" are those defined in "Powders" authored by Kiichiro KUBO, et al. (pp. 56-66, published 1979).

The silica-coated zinc oxide fine particles obtained through the above-described method have such a characteristic that ratio I of infrared absorption peak absorbance of silica film of the silica-coated zinc oxide fine particles at 1150 to 1250 cm$^{-1}$ to that at 1000 to 1100 cm$^{-1}$ as determined on an infrared absorption spectrum is 0.2 or more, preferably 0.3 or more, more preferably 0.4 or more (I=I1/I2; wherein I1 denotes absorption peak intensity at 1150 to 1250 cm$^{-1}$ and I2 denotes absorption peak intensity at 1000 to 1100 cm$^{-1}$, after subtraction of the base line value). A transmission infrared absorption spectrum of the silica film of silica-coated zinc oxide can be obtained by use of the KBr powder method.

Generally, silica coating obtained through firing by use of, for example, the sol-gel method, or through CVD exhibits ratio I of absorption peak intensity at 1150 to 1250 cm$^{-1}$ to that at 1000 to 1100 cm$^{-1}$ of lower than 0.2. Variation of this value is generally accepted to be attributable to changes in chemical bonds or modifications of functional groups, which alter characteristics of silica film in terms of hydrophilicity and oil absorption.

The silica layer of the silica-coated zinc oxide fine particles which are used in the present method preferably has a refractive index of 1.435 or more, more preferably 1.440 or more. Refractive indices less than 1.435 are less preferred, in view that density of the layer decreases. Silica film which has been obtained through a typical sol-gel method but which has not been fired has a refractive index less than 1.435. Such a film, having a low density, is not practically used. In general, the density of silica film is known to be positively correlated with the refractive index thereof (e.g., C. Jeffery Brinker, Sol-Gel Science, 581-583, Academic Press (1990)).

As used herein, within the context of the present method, the term "dense" means that the formed silica film has high density and is uniform without pinholes or cracks. The term "practical" means that strong bonding (-Si-O-Zn-bonding) between silica and zinc oxide (serving as a substrate) prevents defoliation of the coating or a like phenomenon, whereby physical properties of silica-coated zinc oxide tend to be consistent.

The refractive index is determined by use of a silica film which is formed on a silicon wafer which has been simultaneously immersed in a composition for forming silica coating upon synthesis of silica-coated zinc oxide. In other words, the same silica film as formed on the surfaces of zinc oxide particles is considered to be formed on the silicon wafer. The refractive index of the silica film formed on the silicon wafer can be determined by use of an ellipsometer (LASSER ELLIPSOMETER ESM-1A, product of ULVAC).

The silica-coated zinc oxide fine particles which are used in the present method exhibit a photocatalytic activity of 60 Pa/min or less, preferably 50 Pa/min or less, as measured through the tetralin auto-oxidation method (the initial oxygen consumption). When the photocatalytic activity as measured through the tetralin auto-oxidation method exceeds 60 Pa/min, the effect of suppressing photocatalytic activity cannot be fully attained, possibly by failing to attain satisfactory durability, which is not preferred.

The tetralin auto-oxidation method is described by Manabu KIYONO in "Titanium oxide - Physical Properties and Application Techniques," published by Giho-do, pp. 196-197, 1991. Determination conditions include: temperature; 40°C, tetralin; 20 mL, and zinc oxide; 0.02 g.

The photocatalytic activity of the silica-coated zinc oxide fine particles which are used in the present method is measured through the sunset yellow method (dye color fading rate), the Parasol 1789 method, or the ethylhexyl p-methoxycinnamate method, which are described in Examples.

The dye color fading rate ΔAABS490/hour) of the silica-coated zinc oxide fine particles which are used in the present invention is preferably 0.1 or less, more preferably 0.05 or less, as measured through the sunset yellow method. When the dye color fading rate exceeds 0.1, the effect of suppressing photocatalytic activity cannot be fully attained, possibly by failing to attain satisfactory durability, which is not preferred.

The organic UV absorber decomposition (UV absorber: Parasol 1789) rate of the silica-coated zinc oxide fine particles which are used in the present invention is preferably 0.02 or less, more preferably 0.01 or less, as measured through the Parasol 1789 method. When the organic UV absorber decomposition rate as measured through the Parasol 1789 method exceeds 0.02, the effect of suppressing photocatalytic activity cannot be fully attained, possibly failing to attain satisfactory durability, which is not preferred.

The percent organic UV absorber decomposition (UV absorber: ethylhexyl p-methoxycinnamate) of the silica-coated zinc oxide fine particles which are used in the present invention is preferably 5% or less, more preferably 3% or less, as measured through the ethylhexyl p-methoxycinnamate method. When the percent organic UV absorber decomposition as measured through the ethylhexyl p-methoxycinnamate method exceeds 5%, the effect of suppressing photocatalytic activity cannot be fully attained, possibly by failing to attain satisfactory durability, which is not preferred.

The amount of large particles (5 $\mu$m or more) contained in the silica-coated zinc oxide powder is determined in the following manner.

When a sample is a powder containing silica-coated zinc oxide fine particles obtained by coating the surfaces of zinc oxide particles with silica, the sample (20 g) is accurately weighed, and is then placed in purified water (1,800 ml) at room temperature, followed by thorough stirring. A proper amount (10 ml) of a dispersant, such as a 10% aqueous solution of sodium hexametaphosphate, is added to the above mixture, followed by stirring. After completion of stirring, the mixture is subjected to ultrasonic dispersion for 10 minutes. The ultrasonic dispersion can be performed by use of an ultrasonic homogenizer (e.g., US-300T, product of Nippon Seiki Seisakusho, output: 300 W, oscillation frequency: 20 kHz). Subsequently, the suspension is poured onto a precision micro-mesh sieve having a mesh-size of 5 $\mu$m set on a particle classifier of Yokohama Rika (model PS-80). Subsequently, wet precision classification is performed by means of an ultrasonic vibrator, an electromagnetic vibrator, and a suction pump, which are incorporated in the apparatus. After completion of the classification, water in a washing bottle is jetted to the sieve in order to collect the powder remaining on the sieve, and the powder is then placed in a glass container together with purified water. The glass container is placed in a 110°C drying apparatus so as to evaporate water. The remaining residue is collected and weighed. The weight ratio of the residue to the original sample (20 g) represents the amount of large particles having a particle size of 5 $\mu$m or more.

When a sample is a powder containing hydrophobicized silica-coated zinc oxide fine particles obtained by coating the surfaces of zinc oxide particles with silica and then surface-treating the particles by use of a hydrophobicity-imparting agent, in the above-described classification operation, wet precision classification can be performed by using, instead of water, an equi-volume mixture solvent of water and methanol as the solvent other than the dispersant. After completion of the classification, the powder remaining on the sieve is dried by air, and is then placed in a 110°C drying apparatus. The remaining residue is collected and weighed. The weight ratio of the residue to the original sample (20 g) represents the amount of large particles having a particle size of 5 $\mu$m or more.

The thus-obtained amount of large particles (5 $\mu$m or more) contained in the powder containing the silica-coated zinc oxide fine particles is preferably 0.1 mass% or less, more preferably 0.05 mass% or less.

When the amount of large particles (5 $\mu$m or more) exceeds 0.1 mass%, incorporation of the powder in an amount for substantially expressing UV shielding effect raises the following problems: in formation of thin fibers such as multifilaments, breakage of thread frequently occurs; in formation of very thin inflation film, puncture occurs; and in tape formation, stretch factor is limited.

Use of the aforementioned silica-coated zinc oxide powder in combination with a thermoplastic resin facilitates shaping of thin film, thin fiber, or similar products which are free from impaired weather resistance which would otherwise be attributable to photocatalytic action and which are endowed with sufficient UV shielding ability.

The powder comprising silica-coated zinc oxide fine particles of the present invention may contain titanium oxide. UV shielding ability can be increased by containing titanium oxide particles.

In this case, it is preferable to contain the titanium oxide in an amount of 2 parts by mass to 5 parts by mass based on 10 parts by mass of zinc oxide, more preferably 2.5 to 5 parts by mass, and most preferably 3 to 5 parts by mass. It is preferable to contain the titanium oxide in an amount of 2 parts or more by mass in order to increase UV shielding ability by means of titanium oxide mixture. However, when the titanium oxide content is more than 5 parts by mass, there may be an unfavorable case in which the titanium oxide causes unacceptable whiteness and lack of transparency.

Regarding the titanium oxide to be contained, a silica-coated titanium oxide produced by coating in the same method as silica-coated zinc oxide mentioned above, is preferred.

The production method of titanium oxide as a starting material of the silica-coated titanium oxide is not particularly limited and any method may be used. A titanium oxide produced by any production method such as high-temperature vapor phase oxidation of $TiCl_4$, vapor phase hydrolysis of $TiCl_4$, a sulfuric acid process and a chlorine process may be used. With respect to the crystal form of titanium oxide, any of amorphous, rutile, anatase, and brookite may be used and a mixture thereof may also be used. In view of control of the secondary particle size, the titanium oxide is preferably reduced in impurities as much as possible and, more preferably, is reduced in coagulation.

In addition, as the titanium oxide to be contained, the ultrafine mixed-crystal oxide particles containing, in primary particles, mixed crystals having a titanium-oxygen-silicon bond, may be used. No particular limitations are imposed on the method for producing the ultrafine mixed-crystal oxide particles comprising, in primary particles, mixed crystals having a titanium-oxygen-silicon bond, and the ultrafine particles may be produced through, for example, the method described in International Publication WO01/56930.

For the ultrafine mixed-crystal oxide particles containing, in primary particles, mixed crystals having a titanium-oxygen-silicon bond, the ratio B/A may be 0.02 to 0.5, preferably 0.05 to 0.3, when the BET specific surface area is

represented by "A $m^2/g$" and the $SiO_2$ content is represented by "B mass%". When the ratio of B/A is less than 0.02, the dispersion of the ultrafine mixed-crystal oxide particles is insufficient in an organic polymer composition and the resultant shape-imparted product exhibits poor weather resistance. When the ratio of B/A exceeds 0.5, the amount of $SiO_2$ in the surfaces of the particles increases, and the improvement effect of UV shielding ability is lowered, which is not preferred.

The ultrafine mixed-crystal oxide particles containing, in primary particles, mixed-crystals having a titanium-oxygen-silicon bond, may have a BET specific surface area of 10 to 200 $m^2/g$, and preferably 15 to 100 $m^2/g$. When the BET specific surface area exceeds 200 $m^2/g$, difficulty is encountered in producing the particles efficiently, and when the BET specific surface area is less than 10 $m^2/g$, the improvement effect of UV shielding ability is lowered, this is not preferred.

In addition, an average primary particle size is generally 0.008 $\mu$m to 0.15 $\mu$m, and preferably 0.015 $\mu$m to 0.1 $\mu$m. When the average primary particle size of the ultrafine mixed-crystal oxide particles containing, in primary particles, mixed-crystals having a titanium-oxygen-silicon bond is less than 0.008 $\mu$m, difficulty is encountered in producing the particles efficiently, and when the average primary particle size is more than 0.15 $\mu$m, the improvement effect of UV shielding ability is lowered, which is not preferred.

Each of the ultrafine mixed-crystal oxide particles employed in the present invention preferably has a core (a nucleus)/shell (a husk) structure, in which the core is $TiO_2$-rich structure and the shell is $SiO_2$-rich structure. In this case, $SiO_2$ phase is typically supported on a portion of the surface of the particle. The $SiO_2$ phase supported on the surface may assume a dot-like or island-like form (i.e., a discontinuous form), or a strand-like, net-like, or porous form (i.e., a continuous form). Alternatively, the $SiO_2$ phase supported on the surface may assume both a continuous form and a discontinuous form.

The powder comprising silica-coated zinc oxide fine particles of the present invention can be used as a cosmetic material.

In this case, the cosmetic material can be an arbitrary agent type, having a W/O emulsion form, an O/W emulsion form, a liquid form, a solid form, or a gel form, by using the conventional producing method and common raw materials.

For example, an extender pigment (e.g., mica, talc, kaolin, calcium carbonate, magnesium carbonate, silisic acid anhydride, aluminum oxide, barium sulfate), a white pigment (e.g., titanium dioxide, zinc oxide), a color pigment (e.g., red oxide of iron, yellow oxide of iron, black oxide of iron, chromium oxide, ultramarine, iron blue, carbon black), a spherical powder (e.g., nylon powder, polymethyl mathacrylate powder), an oil portion (liquid petrolatum, squalane, castor oil, glyceryl diisostearate, glyceryl triisosterate, glyceryl tri-2-ethylhexanoate, isopropyl myristate, dimethylpolysiloxane, methylphenylpolysiloxane, petrolatum, diisostearyl maleate and purified lanolin), an organic UV absorber (benzophenone type, salicylic acid type, dibenzoylmethane type and urocanic acid type), an existing emulsifier, or an existing antiphlogistic ingredient, not particularly limited, may be used in combination or may be mixed.

Because the powder comprising silica-coated zinc oxide fine particles of the present invention has a high photocatalytic activity-suppressing effect, even if used together with organic UV absorber, the decomposition of the absorber is suppressed and it is used as the cosmetic material having a high and long-life UV shielding ability.

When an antioxidant as a substance (substrate) having an oxidation-inhibiting activity is used in combination in the cosmetic material of the present invention, the amount of free radicals generated by ultraviolet rays can be suppressed further, whereby the photocatalytic activity of silica-coated titanium oxide or silica-coated zinc oxide can be more reduced and therefore, a safe cosmetic material having a remarkably excellent preparation stability and a low phototoxicity can be obtained.

The amount of the powder comprising silica-coated zinc oxide fine particles blended in the cosmetic material of the present invention is preferably from 5 to 25% by mass, more preferably from 5 to 20% by mass, based on the cosmetic material.

If the amount of the above combination is less than 5% by mass, the ultraviolet shielding effect is insufficient. If it is more than 25% by mass, the cosmetic material produces a poor feel during cosmetic use, such as a pale finish in make-up and a rough or creaky feel, and this is not preferred.

An organic polymer composition including the powder comprising silica-coated zinc oxide fine particles of the present invention has excellent processability and moldabilty. Furthermore, the shape-imparted products produced from the composition exhibit superior weather resistance. In particular, shape-imparted products such as stockings, socks and underwear, etc., which are produced by molding/processing extra-fine fibers such as for example a multi-filament, and package materials and agriculture materials, which are produced by molding/processing extra-thin film, exhibit superior shapability, processability and weather resistance.

Furthermore, the molding/processing products in the present invention do not exhibit a bleed out phenomenon which organic UV absorbers do. Therefore, stockings, socks and underwear, etc. have excellent durability against wash, even after being shaped.

The silica-coated zinc oxide powder of the present invention is blended with a thermoplastic resin, to thereby provide an organic polymer composition. Examples of the thermoplastic resin include, but are not limited to, polyethylene, polypropylene, polystyrene, polyethylene terephthalate, AS resins, ABS resins, AES resins, polyvinylidene chloride, methacrylic resins, polyvinyl chloride, polyamides, polycarbonates, polyallyl esters, polyimides, polyacetals, polyether ketones, polyether sulfones, polyphenyl oxides, and polyphenylene sulfides. The amount of silica-coated zinc oxide powder contained in the organic polymer composition is generally 0.01 to 80 mass%, preferably 0.1 to 50 mass%, more preferably 1 to 20 mass%. When a master batch is produced, the amount is generally 1 to 80 mass%, preferably 10 to 40 mass%.

To the thermoplastic resin, generally employed coloring agents, fluorescent agents, and additives may be added in accordance with need. Examples of the additives include antioxidants, anti-aging agents, UV-absorbers, lubricants, antistatic agents, surfactants, fillers (e.g., calcium carbonate and talc), plasticizers, stabilizers, blowing agents, expanding agents, electroconductive powder, electroconductive short fiber, deodorizing agents, softening agents, thickeners, viscosity-reducing agents, diluents, water-repellent agents, oil-repellent agents, cross-linking agents, and curing agents.

However, when thin film, thin fiber, or a similar material is produced from the composition, these additives, coloring agents, and fluorescent agents preferably contain no large particles or coarse fiber. These additives, coloring agents, and fluorescent agents may be incorporated into the thermoplastic resin through kneading. Alternatively, these additives, coloring agents, and fluorescent agents may be added to the thermoplastic resin during a shape-imparting process.

The organic polymer composition containing silica-coated zinc oxide powder and a thermoplastic resin can be obtained by mixing the coated zinc oxide powder and the thermoplastic resin. However, in addition to simply mixing the coated zinc oxide powder and the thermoplastic resin, kneading of the mixture is preferably performed in order to enhance uniformity, because the coated zinc oxide powder has a small particle size. The additives, coloring agents, fluorescent agents, and similar agents may be added to the composition during mixing or kneading.

Mixing of the silica-coated zinc oxide powder and the thermoplastic resin can be performed by use of a mixer such as a V-shape mixer or a Henschel mixer. Kneading can be performed by use of a batch kneader such as a Banbury mixer; or a continuous kneader such as a single extruder, a twin extruder, or a continuous mixer.

The organic polymer composition containing silica-coated zinc oxide powder and a thermoplastic resin may be used singly or may be added as a master batch to a thermoplastic resin for dilution.

Examples of the thermoplastic resin for dilution include, but are not limited to, polyethylene, polypropylene, polystyrene, polyethylene terephthalate, AS resins, ABS resins, AES resins, polyvinylidene chloride, methacrylic resin, polyvinyl chloride, polyamides, polycarbonates, polyallyl esters, polyimides, polyacetals, polyether ketones, polyether sulfones, polyphenyl oxides, and polyphenylene sulfides.

The organic polymer composition of the present invention may be used singly or as a master batch. Such polymer compositions can be subjected to molding methods generally applied to thermoplastic resins, such as injection molding, blow molding, extrusion molding, calender molding, flow molding, compression molding, melt-blown molding, and the spun bond method, whereby shape-imparted products such as fiber, thread, film, sheets, tapes, and injection-molded products and shaped bodies such as hollow thread, pipes, and bottles can be produced. Alternatively, the composition can be subjected to secondary molding methods generally applied to thermoplastic resins such as vacuum forming, air pressure forming, and laminate molding.

No particular limitation is imposed on the shape of the shape-imparted products such as fiber, thread, film, sheets, tapes, and injection-molded products and shaped bodies such as hollow thread, pipes, and bottles formed from the organic polymer composition of the present invention, and any shape-imparted products; i.e., thin (or fine) to thick products, can be produced. However, a characteristic feature of the organic polymer composition of the present invention lies in that thin or fine shape-imparted products, which are difficult to produce through a customary method, can be produced. Thus, the composition is suitable for production of fine fiber or thread, thin film or tapes, etc.

These shape-imparted products may have single-layer structure or multi-layer structures. When a shape-imparted product has a multi-layer structure, a UV shielding ability can be enhanced by providing a top layer of the shape-imparted product from the organic polymer composition of the present invention.

Processability of the organic polymer composition of the present invention itself or a composition containing the organic polymer composition as a master batch, when subjected to a variety of shape-imparting processes, can be evaluated by use, as an index, of the processability thereof attained with a small extruder. Specifically, when a predetermined amount of each organic polymer composition master batch is extruded, by use of a Labo Plastomill (product of Toyo Seiki Seisaku-sho), along with a counterpart resin, and the increase in pressure of kneaded resin with respect to the initial kneaded resin pressure is measured, such an increase in pressure serves as an index for processability not only upon use of a Labo Plastomill, but also processability in several other cases; for example, the case in which thin film is formed through inflation film molding by use of an organic polymer composition master batch itself or the master batch diluted with another thermoplastic resin, or the case in which fiber is formed through a multi-filament forming process. When the increase in pressure of kneaded resin induced by the organic polymer composition master batch is small, processability of the organic polymer composition master batch upon use of a Labo Plastomill is evaluated as being of an excellent level. In addition, puncturing, or a similar phenomenon, is prevented in formation of thin film, and breakage of thread or a similar phenomenon is prevented in formation of fine fibers or a similar material, whereby excellent processability can be attained.

For example, when the organic polymer composition master batch containing polypropylene as a thermoplastic resin is extruded with a counter resin, a full-flight-type 20 mmΦ extruder having screens of 100, 630, 100, 80, and 60 meshes attached thereto is operated at a rotational speed of 45 rpm, and under the following temperature conditions: 230 (inlet) - 230 - 230 - 230°C. The increase in resin pressure as measured after extrusion of 3 kg of the master batch, relative to the resin pressure immediately after start of kneading, is preferably 5 MPa or less, more preferably 3 MPa or less.

For example, when the organic polymer composition master batch containing polyamide as a thermoplastic resin is extruded with a counter resin, a full-flight-type 20 mmΦ extruder having screens of 100, 630, 100, 80, and 60 meshes attached thereto is operated at a rotational speed of 45 rpm, and under the following temperature conditions: 270 (inlet) - 270 - 270 - 270°C. The increase in resin pressure as measured after extrusion of 3 kg of the master batch, relative to the resin pressure immediately after start of kneading, is preferably 10 MPa or less, more preferably 5 MPa or less.

Shape-imparted products such as fiber, thread, film, sheets, tapes, and injection-molded products and shaped bodies such as hollow thread, pipes, and bottles, which are formed from the organic polymer composition of the present invention, *inter alia,* fiber, film, sheets, and tapes, can be used singly or shape-imparted into a multi-layer structure including a substrate and a surface layer formed of the organic polymer composition, through coextrusion with another thermoplastic resin, molding with a substrate, or attaching to a surface of a substrate. No particular limitation is imposed on the film, sheet, or tape thickness, and the thickness is appropriately selected in accordance with use thereof. Generally, the thickness is 0.0005 to 5.0 mm, preferably 0.001 to 1.0 mm, more preferably 0.001 to 0.1 mm. No particular limitation is imposed on the thickness of thread, and the thickness is appropriately selected in accordance with the use thereof. Generally, the thickness is 1 to 500 deniers, preferably 1 to 100 deniers, more preferably 1 to 50 deniers.

Shape-imparted products such as fiber, thread, film, sheets, tapes, and injection-molded products and shaped bodies such as hollow thread, pipes, and bottles, which are formed from the organic polymer composition of the present invention, *inter alia*, fiber, film, sheets, and tapes, can be attached to a surface of a substrate by the mediation of an adhesive. Examples of the adhesive which can be employed include urethane-based, acryl-based, poly(vinyl alcohol)-based, and vinyl-acetate-based adhesives. Alternatively, a peelable protective film may also be provided, by the mediation of an adhesion layer, on shape-imparted products such as fiber, thread, film, sheets, tapes, and injection-molded products and shaped bodies such as hollow thread, pipes, and bottles, formed from the organic polymer composition of the present invention, *inter alia*, fiber, film, sheets, and tapes. Examples of the protective film which can be employed include coated paper having a silicone resin coating as a releasing layer, and biaxially stretched poly(ethylene terephthalate) film. The thus-provided structure having an adhesion layer and a protective film can be attached to any substrate surface by peeling the protective film.

Shape-imparted products such as fiber, thread, film, sheets, tapes, and injection-molded products and shaped bodies such as hollow thread, pipes, and bottles, which are formed from the organic polymer composition of the present invention, *inter alia*, fiber, film, sheets, and tapes, can be printed with a picture or embossed. Three-dimensional structures can be formed from these products.

No particular limitation is imposed on the material and shape of the substrate, so long as the substrate allows formation of a UV-shielding layer on its surface. Examples of the material for forming the substrate include metals such as iron, aluminum, and copper; ceramics such as glass and porcelain; inorganic materials such as gypsum, calcium silicate, and cement; plastics such as polyvinyl chloride, polyester, polyolefin, polycarbonate, polyamide, acrylic resin, ABS resin, polystyrene, phenolic resin, and FRP; organic materials such as wood, plywood, and paper; and fibers such as glass fiber, carbon fiber, and polyester fiber. Multi-layer structures can be formed from shape-imparted products such as fiber, thread, film, sheets, tapes, and injection-molded products and shaped bodies such as hollow thread, pipes, and bottles, formed from the organic polymer composition of the present invention. No particular limitation is imposed on the shape and dimensions of the substrate, and the substrate may have arbitrary shapes such as film, sheet, fiber, woven fabric, non-woven fabric, or three-dimensional structure.

The shape-imparted products or multi-layer structures as described above may be used singly or may be attached to a portion of another structure. No particular limitation is imposed on the additional structure. Examples include inorganic structures such as metal, concrete, glass, and ceramic structures; organic structures such as paper, plastic, wood, and leather structures; and combinations thereof. Examples of specific products include packaging materials, building materials, machinery, vehicles, glass products, electric appliances, agricultural materials, electronic apparatus, tools, tableware, bath products, toiletry products, furniture, clothing, cloth products, fibers, leather products, paper products, sporting goods, futon, containers, eyeglasses, signboards, piping, wiring, brackets, sanitary materials, automobile parts, tents, stockings, socks, gloves, and masks.

EXAMPLES

The present invention will be described in further detail with reference to Examples and Comparative Examples; however, the present invention is not limited to the Examples.

Examples and Comparative Examples, which will be described later, were evaluated for the following items.

(Measurement of Silica Film Thickness)

Silica-coated zinc oxide fine particles were observed under a transmission electron microscope (JEM 2010, product of JEOL; acceleration voltage: 200 V); and the thickness of silica coating on particle surfaces, (a film portion observed to cover substrate particles and having low contrast) was measured.

(Average Primary Particle Size)

Silica-coated zinc oxide fine particles were observed under a transmission electron microscope (JEM 2010, product of JEOL; acceleration voltage: 200 V); 100 arbitrary particles were selected; and particle sizes of the selected particles were measured, from which their average particle size was calculated.

(IR Spectrum Measurement)

A transmission infrared absorption spectrum (by FT-IR-8000 of JASCO) of the silica film of silica-coated zinc oxide fine particles was measured by the KBr method (ratio of light-emitting particles to powder of KBr was 1 : 32 (by mass)). Transmittances and absorption-peak absorbances at 1150 to 1250 $cm^{-1}$ and 1000 to 1100 $cm^{-1}$ were calculated; and absorption peak intensity ratio I ($I=I1/I2$; wherein I1 denotes absorption-peak absorbance at 1150 to 1250 $cm^{-1}$ and I2 denotes absorption-peak absorbance at 1000 to 1100 $cm^{-1}$) was obtained.

(Measurement of Refractive Index)

Refractive index of silica film, which was formed on a silicon wafer dipped into the system in order to synthesize silica-coated zinc oxide particles, was measured by use of an ellipsometer (LASSER ELLIPSOMETER ESM-1A, product of ULVAC).

(Tetralin Auto-oxidation Method)

This method is described in "Titanium Oxide - Physical Properties and Application Techniques," Manabu KIYONO, GIHODO SHUPPAN, p. 196-197, 1991. Measurement conditions were such that temperature: 40°C, tetralin: 20 mL, and zinc oxide: 0.02 g.

(Measurement of Dye Color Fading Rate: Sunset Yellow Method)

The thus-obtained silica-coated zinc oxide particles, uncoated zinc oxide particles (material zinc oxide particles), and commercially available zinc oxide (ZnO 350, product of Sumitomo Osaka Cement), which served as test materials, were measured for dye color fading rate by the sunset yellow method.

First, sunset yellow FCF (dye, product of Wako Pure Chemical Industries) was dissolved in glycerin (98. mass%) to attain a dye concentration of 0.02 mass%. Each test material was dispersed in an amount of 0.067 mass%, and the test-material dispersed solution was irradiated with UV rays (UV ray intensity: 1.65 mW/$cm^2$). With an optical path length set to 1 mm, absorbance at 490 nm, which is a maximum absorption wavelength of sunset yellow FCF, was measured continuously by use of a spectral photometer (UV-160, product of SHIMADZU). Subsequently, a difference ($\Delta ABS_{490}$/ hour) between the measured absorbance decreasing rate and that of a control test solution (not containing zinc oxide) was calculated.

(Measurement of Organic UV Absorber Decomposition Rate: Parasol 1789 Method)

The thus-obtained silica-coated zinc oxide particles, uncoated zinc oxide particles (material zinc oxide particles), and commercially available zinc oxide (ZnO 350, product of Sumitomo Osaka Cement), which served as test materials, were measured for their rates of decomposition of Parasol 1789, which is an organic UV absorber.

Specifically, each test material was dispersed into a polyethylene glycol 300 solution containing 0.045 mass% of 4-tert-butyl-4'-methoxybenzoylmethane (Parasol 1789) so as to obtain a slurry containing the test material in an amount of 1 mass%. The slurry (1.2 g) was then placed in a glass container, which was irradiated with UV rays for 10 hours (1.65 mW/cm$^2$). Subsequently, 1 g of the slurry was sampled, and isopropyl alcohol (2 mL), hexane (2 mL), and distilled water (3 mL) were successively added. Through stirring, Parasol 1789 was extracted to the hexane phase; and absorbance of the hexane phase (optical path length: 1 mm, wavelength: 340 nm) was measured by use of a spectral photometer (UV-160, SHIMADZU). Subsequently, a difference ($\Delta$ABS$_{340}$/hour) between the measured absorbance decreasing rate at 340 nm and that of a control test solution (not containing zinc oxide) was calculated.

(Measurement of Percent Organic UV Absorber Decomposition: Ethylhexyl p-Methoxycinnamate Method)

The thus-obtained silica-coated zinc oxide fine particles, uncoated zinc oxide particles (material zinc oxide particles), and commercially available zinc oxide (ZnO 350, product of Sumitomo Osaka Cement), which served as test materials, were measured for their percent decomposition of ethylhexyl p-methoxycinnamate, which is an organic UV absorber.
Specifically, each test material was dispersed into a polyethylene glycol 300 solution containing 0.05 mass% of 2-ethylhexyl p-methoxycinnamate so as to obtain a slurry containing the test material in an amount of 0.33 mass%. The slurry (1.2 g) was then placed in a glass container, which was irradiated with UV rays for 90 minutes (1.65 mW/cm$^2$). Subsequently, 1 g of the slurry was sampled, and isopropyl alcohol (2 mL), hexane (2 mL), and distilled water (3 mL) were successively added. Through stirring, 2-ethylhexyl p-methoxycinnamate was extracted to the hexane phase; and absorbance of the hexane phase (optical path length: 1 mm, wavelength: 300 nm) was measured by use of a spectral photometer (UV-160, product of SHOMADZU). Subsequently, the percent decomposition of 2-ethylhexyl p-methoxycinnamate was obtained from the difference between the measured absorbance decreasing rate at 300 nm and that of a control test solution (not containing zinc oxide).

(Zinc Releasability Test)

Release of zinc ions from silica-coated zinc oxide containing powder to water was evaluated as follows.
Each of silica-coated zinc oxide containing powder (including silica-coated zinc oxide containing powder having hydrophobic surface) and uncoated zinc oxide powder was dispersed into solutions of various pHs in an amount of 5 mass%, followed by stirring at 25°C for 3 hours. Subsequently, each of the powder-dispersed solutions was subjected to centrifugal separation for precipitation; and the quantity of zinc ions within the supernatant was measured by use of an atomic absorption spectrophotometer (Z-8200, product of Hitachi).

(Amount of Large particles of 5 $\mu$m or More)

When a sample is powder containing silica-coated zinc oxide particles obtained by coating the surfaces of zinc oxide particles with silica, 20 g of the sample is accurately weighed, and is then placed in purified water (1800 mL) at room temperature, followed by thorough stirring. An appropriate amount (10 mL) of a dispersant, such as an 10% aqueous solution of sodium hexametaphosphate is added to the sample-added water, and the resultant solution is then stirred, and subjected to ultrasonic dispersion for 10 minutes. The ultrasonic dispersion can be performed by use of an ultrasonic homogenizer (US-300T, product of Nippon Seiki Seisakusho, output: 300 W, oscillation frequency : 20 kHz). Subsequently, the slurry is poured onto a precision micro-mesh sieve having a mesh-size of 5 $\mu$m set on a particle classifier of Yokohama Rika (model PS-80). Subsequently, wet precision classification is performed by means of an ultrasonic vibrator, an electromagnetic vibrator, and a suction pump, which are incorporated in the apparatus. After completion of the classification, water in a washing bottle is jetted to the sieve in order to collect the powder remaining on the sieve, which powder is then placed in a glass container together with purified water. The glass container is placed in a 110°C drying apparatus so as to evaporate the water. The remaining residue is collected and weighed. The weight ratio of the residue to the original sample (20 g) represents the amount of large particles having a particle size of 5 $\mu$m or greater.
When a sample is powder containing silica-coated zinc oxide particles obtained by coating the surfaces of zinc oxide particles with silica and then surface-treating the particles by use of a hydrophobicity-imparting agent, in the above-described classification operation, wet precision classification can be performed by using, instead of water, an equi-volume mixture solvent of water and methanol as the solvent other than the dispersant. After completion of the classification, the powder remaining on the sieve was dried in air, and is then placed in a 110°C drying apparatus. The remaining residue is collected and weighed. The weight ratio of the residue to the original sample (20 g) represents the amount of large particles having a particle size of 5 $\mu$m or greater.

(Kneaded Resin Pressure)

A variety of organic polymer composition master batches each containing silica-coated zinc oxide containing powder and a thermoplastic resin were each measured for kneaded resin pressure by use of a Labo Plastomill of Toyo Seiki Seisaku-sho, and they were evaluated for their processability. Kneading conditions of the Labo Plastomill were as follows. A full-flight-type 20 mmΦ extruder having screens of 100, 630, 100, 80, and 60 meshes attached thereto was operated at a rotational speed of 45 rpm, and temperature conditions were determined in accordance with the type of resin. The processability of each organic polymer composition master batch was evaluated on the basis of a rise in resin pressure as measured after extrusion of 3 kg of the master batch, relative to the resin pressure immediately after start of kneading.

(Suppression of Impairment of Weather Resistance Attributable to Photocatalytic Action)

An organic polymer composition master batch which contains 20% silica-coated zinc oxide containing powder was added to a dilution resin in such a manner that the amount of the silica-coated zinc oxide containing powder becomes 1%. From the thus-obtained resin, film having a thickness of 100 $\mu$m was obtained by use of a 25 mm T-die film molding machine of Chuo Kikai Seisakusho.

The thus-obtained film was placed in a Sunshine Super-Long-Life Weather Meter WEL-SUN-HCH of Suga Test Instruments for 180 hours in order to test impairment of weather resistance attributable to photocatalytic action.

Evaluation for impairment of weather resistance attributable to photocatalytic action was performed on the basis of a change in haze of the film. Specifically, before and after being placed in the Sunshine Super-Long-Life Weather Meter, haze of the film was measured by use of a reflecto/transmissometer HR-100 of Murakami Color Research Laboratory, and the impairment of weather resistance attributable to photocatalytic action was evaluated on the basis of a change in the measured haze. It can be judged that the smaller the change in haze, the more the impairment of weather resistance, attributable to photocatalytic action, is suppressed.

Example 1:

In a reactor (50 L), deionized water (18.25 L), ethanol (22.8 L, product of Junsei Chemical Co., Ltd.), and 25 mass% aqueous ammonia (124 mL, product of Taisei Chemical Industries Co., Ltd.) were mixed, and zinc oxide particles serving as raw material (1.74 kg, high-purity zinc oxide UFZ-40; primary particle size 27 nm, product of Showa Titanium Co., Ltd.) were dispersed in the mixture, to thereby prepare a suspension A. Subsequently, tetraethoxysilane (1.62 L, product of GE Toshiba Silicones) and ethanol (1.26 L) were mixed, to thereby prepare a solution B.

While suspension A was stirred, solution B was added over nine hours at a constant speed, and the resultant solution was allowed to ripen for 12 hours. Film formation and ripening were conducted at 45°C. Thereafter, solid matter was separated through centrifugal filtration, dried in vacuum for 12 hours at 50°C, and dried by the application of 80°C air for 12 hours. Subsequently, the dried solid matter was milled by a jet mill, whereby silica-coated zinc oxide fine particles were obtained.

Through the KBr method, transmission infrared absorption spectra of the thus-obtained silica-coated zinc oxide were determined. As a result, at 1,000 to 1,200 cm$^{-1}$, the thus-obtained silica-coated zinc oxide exhibited absorption attributed to Si-O-Si stretching vibrations, and at 2,800 to 3,000 cm$^{-1}$, the silica-coated zinc oxide did not exhibit absorption attributed to C-H stretching vibrations, demonstrating that the produced film was silica.

Moreover, the following were measured: primary particle size, silica film thickness, ratio I of infrared absorption intensity as measured in infrared absorption spectra, refractive index of silica film, photocatalytic activity measured by the tetralin auto-oxidation method, etc. The results are shown in Table 1.

The dye color fading rate of the silica-coated zinc oxide fine particles measured by the tetralin auto-oxidation method was found to be 0.1 ($\Delta ABS_{490}$/hr) or less, proving that suppression of decomposition of the dye was of low level as compared with uncoated product or commercially available zinc oxide.

The decomposition rate of organic UV absorber of the silica-coated zinc oxide fine particles measured by the Parasol 1789 method was found to be 0.02 ($\Delta ABS_{340}$/hr) or less, proving that the particles have considerably low decomposition ability of the organic UV absorber as compared with uncoated product or commercially available zinc oxide.

The decomposition ratio of the silica-coated zinc oxide fine particles was found to be 5% or less, proving that the particles have low decomposition ability of the organic UV absorber as compared with uncoated product or commercially available zinc oxide.

[Table 1]

| Measurement items | Measurement values |
|---|---|
| Primary particle size (nm) | 27 |
| Silica film thickness (nm) | 3 |

(continued)

| Measurement items | Measurement values |
|---|---|
| Infrared absorption peak intensity ratio I value | 0.45 |
| Refractive index of silica film | 1.443 |
| Tetralin auto-oxidation activity (Pa/min) | 39 |
| Sunset yellow color fading rate ($\Delta ABS_{490}$/hr) | 0 |
| Decomposition rate as determined by the Parasol 1789 method ($\Delta ABS_{340}$/hr) | 0.002 0 |
| Decomposition ratio as determined by the ethylhexyl paramethoxycinnamate method (%) | 0.5 |

To silica-coated zinc oxide (97 parts by mass), a solution of dimethylpolysiloxane (3 parts by mass, KF96-100CS, product of Shin-Etsu Chemical Co., Ltd.) in dichloromethane was added, and the mixture was blended well by a Henschel mixer (product of Mitsui-Miike). Subsequently, solvent was removed at 90°C under drying in vacuum, and the dried material was fired for six hours at 200°C, to thereby yield silica-coated zinc oxide having a hydrophobicized surface. The amount of large particles (5 μm or more) contained in the thus-obtained silica-coated zinc oxide containing powder, was found to be 1.6 mass%. Results regarding the release of zinc ions were shown in Table 2.

The silica-coated zinc oxide of the present invention exhibited a very reduced release of zinc ions at different pH values as compared with uncoated zinc oxide, and the amount of zinc ions in purified water was found to be as low as 0.5 ppm or less. When the surface of the silica-coated zinc oxide of the present invention was further hydrophobicized, release of zinc ions at different pH values was suppressed. Therefore, organic polymer compositions or shape-imparted products thereof are also expected to exhibit the excellent effect of preventing zinc ion release, which release may occur upon contact with an acid or alkaline solution.

[Table 2]

| | Released zinc ion (ppm) | | |
|---|---|---|---|
| | Purified water (pH 6.4) | 1% NH₃ solution (pH 11.4) | 0.01% Nitric acid solution (pH 2.5) |
| Silica-coated zinc oxide particles of Example 1 | <0.5 | 20 | 9 |
| Surface-hydrophobicized silica-coated zinc oxide particles of Example 1 | <0.5 | 2 | 1 |
| Uncoated starting zinc oxide particles of Example 1 | 8 | 480 | 91 |

Moreover, the surface-hydrophobicized powder was subjected to dry-format precision classification by use of a turbo classifier (product of Nisshin Engineering K.K.). The amount of large particles (5 μm or more) in the thus-obtained silica-coated zinc oxide containing powder was found to be 0.02 mass%.

The thus-obtained powder containing silica-coated zinc oxide (20 parts by mass) and polypropylene (80 parts by mass, PW600N, product of SunAllomer Ltd.) were mixed in a super-mixer (product of Kawada K.K.) for three minutes at 600 rpm. Subsequently, the mixture was kneaded in a 30 mm different-direction double screw extruder (product of Nakatani K.K.), to thereby yield an organic polymer composition master batch.

Processability of the thus-obtained organic polymer composition master batch by a Labo Plastomill was evaluated under thermal condition of 230 (inlet) - 230 - 230 - 230°C. As is apparent from Table 3, rise in resin pressure was found to be as low as 1.3 MPa, and processability was good.

The thus-obtained organic polymer composition master batch was diluted with PW600N (product of SunAllomer Ltd.), and a test was conducted to investigate the level at which weather resistance was impaired by photocatalytic action.

The hazes of the film before and after the film was subjected to a Sunshine Super-long-Life Weather Meter were 18.2 and 18.6, respectively, and the variation of the hazes was found to be as small as 0.4, indicating minimized impairment of weather resistance caused by photocatalytic action. This shows that the thus-obtained silica-coated zinc oxide fine particles cause extremely low impairment of weather resistance by photocatalytic action to polypropylene.

Example 2:

The procedure of Example 1 was repeated, except that polyethylene (Japan polyolefins Co., Ltd., JH607C) was used instead of polypropylene (product of SunAllomer Ltd., PW600N), to thereby yield an organic polymer composition master batch.

In a manner similar to that described in Example 1, the processability of the thus-obtained organic polymer composition master batch by a Labo Plastomill was evaluated. As a result, the rise in resin pressure was found to be as low as 0.7 MPa, and processability was good.

The thus-obtained organic polymer composition master batch was diluted with polyethylene (product of Japan Polyolefins Co., Ltd., JH607C), and a test on impaired weather resistance caused by photocatalystic action was performed. As a result, the haze variation was found to be as small as 0.2, indicating minimized impairment of weather resistance caused by photocatalytic action. This shows that the thus-obtained silica-coated zinc oxide fine particles cause extremely low impairment of weather resistance caused by photocatalytic action to polyethylene.

Example 3:

The procedure of Example 1 was repeated, except that polyamide (product of EMS-Showa Denko K.K., A28GM) was used instead of polypropylene (product of SunAllomer Ltd., PW600N), to thereby yield an organic polymer composition master batch.

The procedure of Example 1 was repeated, except that the thermal condition was changed to 270 (inlet) - 270 - 270 - 270°C, and the processability of the thus-obtained organic polymer composition master batch, by a Labo Plastomill, was evaluated. As a result, the rise in resin pressure was found to be as low as 2.1 MPa, and processability was good.

Example 4:

The procedure for producing the silica-coated zinc oxide fine particles of Example 1 was repeated, except that titanium oxide powder (high-purity titanium oxide F-4; primary particle size 30 nm, product of Showa Titanium Co., Ltd.) was used as raw material, to obtain silica-coated titanium oxide fine particles.

To the thus-obtained silica-coated titanium oxide (94 parts by mass), a solution of dimethylpolysiloxane (6 parts by mass, KF96-100CS, product of Shin-Etsu Chemical Co., Ltd.) in dichloromethane was added, and the mixture was blended well by a Henschel mixer (product of Mitsui-Miike). Subsequently, the solvent was removed at 90°C by drying under vacuum, and the dried material was fired for six hours at 200°C, to thereby yield silica-coated titanium oxide having hydrophobicized surface. The amount of large particles (5 $\mu$m or more) contained in the thus-obtained silica-coated titanium oxide powder, was found to be 1.5% by mass.

Moreover, the surface-hydrophobicized powder was subjected to dry-format precision classification by use of a turbo classifier (product of Nissin Engineering K.K.). The amount of large particles (5 $\mu$m or more) in the thus-obtained silica-coated titanium oxide powder was found to be 0.02 mass%.

Subsequently, thus-classified silica-coated titanium oxide powder (30 parts by mass) and the classified (as Example 1) silica-coated zinc oxide powder (70 parts by mass) were mixed uniformly, and then a powder comprising silica-coated zinc oxide fine particles was obtained.

The amount of large particles (5 $\mu$m or more) in the thus-obtained powder comprising silica-coated zinc oxide fine particles was found to be 0.02 mass%.

The powder comprising silica-coated zinc oxide fine particles (20 parts by mass) and polypropylene (80 parts by mass, PW600N, product of SunAllomer Ltd.) were mixed in a super-mixer (product of Kawada K.K.) for three minutes at 600 rpm. Subsequently, the mixture was kneaded in a 30 nm different-direction double screw extruder (product of Nakatani K.K.), to thereby yield an organic polymer composition master batch.

In a manner similar to that described in Example 1, processability of the thus-obtained organic polymer composition master batch by a Labo Plastomill was evaluated. As a result, rise in resin pressure was found to be as low as 1.0 Mpa, and processability was good.

On the other hand, when the thus-obtained organic polymer composition master batch was subjected to a test in a manner similar to that described in Example 1 on weather resistance impairment caused by photocatalytic action, the haze variation was found to be as low as 0.7, indicating minimal impairment of weather resistance caused by photocatalytic action.

Comparative Example 1:

The procedure of Example 1 was repeated, except that unclassified powder containing silica-coated zinc oxide was used instead of classified powder containing silica-coated zinc oxide, to thereby yield an organic polymer composition master batch.

In a manner similar to that described in Example 1, processability of the thus-obtained organic polymer composition master batch by a Labo Plastomill was evaluated. As a result, rise in resin pressure was found to be as high as 8.6 MPa and the processability was poor.

However, as a result of a test conducted similar to that described in Example 1 on the thus-obtained organic polymer composition master batch for investigating the level at which weather resistance was impaired by photocatalystic action, the haze variation of the film was found to be as small as 0.5, indicating minimized impairment of weather resistance caused by photocatalytic action. This shows that the thus-obtained silica-coated zinc oxide fine particles undergo minimal impairment of weather resistance caused by photocatalytic action against polyplopylene.

Comparative Example 2:

The procedure of Example 2 was repeated, except that the powder containing silica-coated zinc oxide used in Comparative Example 1 was employed, to thereby yield an organic polymer composition master batch. In a manner similar to that described in Example 2, the processability of the thus-obtained organic polymer composition master batch by a Labo Plastomill was evaluated. As a result, a rise in resin pressure was found to be as high as 3.5 MPa, and the processability was poor.

On the other hand, when the thus-obtained organic polymer composition master batch was subjected to a test in a manner similar to that described in Example 2 on weather resistance impairment caused by photocatalytic action, the haze variation of the film was found to be as low as 0.3, indicating minimal impairment of weather resistance caused by photocatalytic action. This shows that the thus-obtained silica-coated zinc oxide fine particles undergo minimal impairment of weather resistance caused by photocatalytic action against polyethylene.

Comparative Example 3:

The procedure of Example 3 was repeated, except that the powder containing silica-coated zinc oxide used in Comparative Example 1 was employed, to thereby yield an organic polymer composition master batch. In a manner similar to that described in Example 3, processability of the thus-obtained organic polymer composition master batch by a Labo Plastomill was evaluated. As a result, rise in resin pressure was found to be as high as 15 MPa or higher, and the processability was poor.

Comparative Example 4:

The procedure of Example 1 was repeated, except that high-purity zinc oxide (UFZ-40; primary particle size 27 nm, product of Showa Titanium Co., Ltd.) was used instead of the powder containing silica-coated zinc oxide particles before being hydrophobicized, to thereby yield an organic polymer composition master batch. In a manner similar to that described in Example 1, processability of the thus-obtained organic polymer composition master batch by a Labo Plastomill was evaluated. As a result, the rise in resin pressure was found to be as high as 4.2 MPa, and processability was poor.

In a manner similar to that described in Example 1, the thus-obtained organic polymer composition master batch was subjected to a test on weather resistance impairment caused by photocatalystic action. As a result, the haze variation of the film was found to be as high as 8.2, indicating significant impairment of weather resistance caused by photocatalytic action. This shows that the thus-obtained silica-coated zinc oxide fine particles undergo significant impairment of weather resistance caused by photocatalytic action against polypropylene.

Comparative Example 5:

The procedure of Example 2 was repeated, except that high-purity zinc oxide (UFZ-40; primary particle size 27 nm, product of Showa Titanium Co., Ltd.) was used instead of the powder containing silica-coated zinc oxide particles before being hydrophobicized, to thereby yield an organic polymer composition master batch. In a manner similar to that described in Example 2, processability of the thus-obtained organic polymer composition master batch by a Labo Plastomill was evaluated. As a result, the rise in resin pressure was found to be as high as 6.5 MPa, and the processability was poor.

In a manner similar to that described in Example 2, the thus-obtained organic polymer composition master batch was subjected to a test of weather resistance impairment caused by photocatalystic action. As a result, the haze variation of the film was found to be as high as 6.5, indicating significant impairment of weather resistance caused by photocatalytic action. This shows that the thus-obtained silica-coated zinc oxide fine particles undergo significant impairment of weather resistance caused by photocatalytic action against polyethylene.

Comparative Example 6:

An aqueous suspension of zinc oxide particles (high-purity zinc oxide UFZ-40; primary particle size 27 nm, product of Showa Titanium Co., Ltd.) (ZnO concentration: 50 g/L) was heated to 80°C. Under stirring, an aqueous solution of sodium silicate (the ratio of $SiO_2$ to zinc oxide: 10% by weight) was added to the suspension. The mixture was allowed to ripen for 10 minutes and, subsequently, sulfuric acid was added over 60 minutes under stirring, whereby the mixture was neutralized to pH 6.5. The mixture was allowed to ripen for 30 minutes, and then the resultant suspension was subjected to filtration and washing with water, followed by drying with heat for five hours at 130°C. The thus-obtained dried product was milled with a jet mill, to thereby yield powder containing silica-coated zinc oxide. The procedure of Example 1 was repeated, except that the powder was used instead of unhydrophobicized silica-coated zinc oxide fine particles, whereby an organic polymer composition master batch was obtained.

In a manner similar to that described in Example 1, processability of the thus-obtained organic polymer composition master batch by a Labo Plastomill was evaluated. As a result, rise in resin pressure was found to be as low as 2.2 MPa, and processability was good.

In a manner similar to that described in Example 1, the thus-obtained organic polymer composition master batch was subjected to a test of weather resistance impairment caused by photocatalystic action. As a result, the haze variation of the film was found to be as high as 3.5, indicating significant impairment of weather resistance caused by photocatalytic action. This shows that the thus-obtained silica-coated zinc oxide fine particles undergo significant impairment of weather resistance caused by photocatalytic action against polypropylene.

[Table 3]

| | Classification | Resin | Processability Rise in kneading resin pressure of composition | Deterioration of weatherability by photocatalyst action Haze of film | | |
| --- | --- | --- | --- | --- | --- | --- |
| | | | | Initial | After 180 hours of weather meter test | Variation |
| Ex. 1 | Yes | PP | 1.3 MPa | 18.2 | 18.6 | 0.4 |
| Ex. 2 | Yes | PE | 0.7 MPa | 13.0 | 13.2 | 0.2 |
| Ex. 3 | Yes | PA | 2.1 MPa | - | - | - |
| Ex. 4 | Yes | PP | 1.0 MPa | 19.3 | 20.0 | 0.7 |
| Comp. Ex. 1 | No | PP | 8.6 MPa | 18.5 | 19.0 | 0.5 |
| Comp. Ex. 2 | No | PE | 3.5 MPa | 13.1 | 13.4 | 0.3 |
| Comp. Ex. 3 | No | PA | 15 MPa | - | - | - |
| Comp. Ex. 4 | Yes | PP | 4.2 MPa | 18.6 | 26.8 | 8.2 |
| Comp. Ex. 5 | Yes | PE | 3.1 MPa | 12.6 | 19.1 | 6.5 |
| Comp. Ex. 6 | Yes | PP | 2.8 MPa | 17.5 | 21.0 | 3.5 |

INDUSTRIAL APPLICABILITY

The present invention facilitates processing of thin films and thin fibers endowed with sufficient UV shielding ability without inviting impaired weather resistance which may otherwise be caused by photocatalytic action. The invention provides silica-coated zinc oxide powder containing large particles of 5 $\mu$m or more in an amount of 0.1 mass% or less; organic polymer compositions containing the powder; and shape-imparted products produced from the compositions.

**Claims**

1. A powder comprising silica-coated zinc oxide fine particles in which the surface of each particle is coated with silica, wherein large particles of 5 $\mu$m or more account for 0.1 mass% or less, and wherein the number of large particles has been reduced by a dry-format classification.

2. A powder comprising surface-hydrophobicized silica-coated zinc oxide fine particles in which the silica-coated zinc oxide fine particles whose surfaces have been coated with silica are further treated with a hydrophobicity-imparting agent, wherein large particles of 5 μm or more account for 0.1 mass% or less, and wherein the number of large particles has been reduced by a dry-format classification.

3. The powder as claimed in claim 2, wherein the hydrophobicity-imparting agent is one or more members selected from the group consisting of silicone oils, alkoxysilanes, silane coupling agents, and higher fatty acid salts.

4. The powder as claimed in any of claims 1 through 3, wherein the silica-coated zinc oxide fine particles have silica coating of 0.5 to 100 nm in thickness (determined by TEM).

5. The powder as claimed in any of claims 1 through 4, wherein the silica-coated zinc oxide fine particles have an average primary particle size of 1 to 200 nm (determined by TEM).

6. The powder as claimed in claim 2 or 3, wherein the surface-hydrophobicized, silica-coated zinc oxide fine particles have an average primary particle size of 5 to 120 nm and a silica-film thickness of 0.5 to 25 nm.

7. The powder as claimed in any of claims 1 through 6, wherein the ratio I of infrared absorption peak intensity of silica film of the silica-coated zinc oxide fine particles at 1150 to 1250 cm$^{-1}$ to that at 1000 to 1100 cm$^{-1}$ as determined on an infrared absorption spectrum is 0.2 or more (I=I1/I2; wherein I1 denotes absorption peak intensity at 1150 to 1250 cm$^{-1}$ and I2 denotes absorption peak intensity at 1000 to 1100 cm$^{-1}$), and the silica film has a refractive index of 1.435 or more.

8. The powder as claimed in any of claims 1 through 7, wherein the powder exhibits a photocatalytic activity of 60 Pa/min or less as measured through the tetralin auto-oxidation method.

9. The powder as claimed in any of claims 1 through 8, wherein the powder exhibits a dye color fading rate ($\Delta ABS_{490}$/hour) of 0.1 or less as measured through the sunset yellow method.

10. The powder as claimed in any of claims 1 through 9, wherein the powder exhibits an organic UV absorber decomposition rate ($\Delta ABS_{340}$/hour) of 0.01 or less as measured through the Parasol 1789 Method.

11. The powder as claimed in any of claims 1 through 10, wherein the powder exhibits a percent organic UV absorber decomposition of 5% or less as measured through the ethylhexyl p-methoxycinnamate method.

12. The powder comprising silica-coated zinc oxide fine particles as claimed in any one of claims 1 through 11, which contains titanium oxide.

13. The powder comprising silica-coated zinc oxide fine particles as claimed in claim 12, wherein titanium oxide in an amount of 2 parts by mass to 5 parts by mass is further contained based on zinc oxide of 10 parts by mass.

14. The powder comprising silica-coated zinc oxide fine particles as claimed in claim 12 or 13, wherein at least one part of titanium oxide is coated with silica.

15. The powder comprising silica-coated zinc oxide fine particles as claimed in any one of claims 12 through 14, wherein the titanium oxide contains a mixed crystal having a titanium-oxygen-silicon bond in its primary particles.

16. The powder comprising silica-coated zinc oxide fine particles as claimed in claim 15, wherein when the BET specific surface area of titanium oxide is represented by "A m$^2$/g" and the SiO$_2$ content is represented by "B mass%", the ratio of B/A is from 0.02 to 0.5.

17. The powder comprising silica-coated zinc oxide fine particles as claimed in claim 15 or 16, wherein BET specific surface area of the titanium oxide is from 10 to 200 m$^2$/g.

18. The powder comprising silica-coated zinc oxide fine particles as claimed in any one of claims 15 through 17, wherein the average primary particle size of titanium oxide is 0.008 μm to 0.15 μm.

19. The powder comprising silica-coated zinc oxide fine particles as claimed in any one of claims 15 through 18, wherein the titanium oxide has core (a nucleus)/shell (a husk) structure, wherein the core is TiO$_2$-rich structure and the shell

is $SiO_2$-rich structure.

20. An organic polymer composition containing a powder comprising silica-coated zinc oxide fine particles as claimed in any one of claims 1 through 19, and a thermoplastic resin.

21. An organic polymer composition consisting essentially of a powder comprising silica-coated zinc oxide fine particles as claimed in any one of claims 1 through 19, and a thermoplastic resin.

22. The organic polymer composition as claimed in claim 20 or 21, wherein the thermoplastic resin is selected from the group consisting of polyethylenes, polypropylenes, polystyrenes, polyamides, polyesters, and polycarbonates.

23. A shape-imparted product of an organic polymer composition as claimed in any one of claims 20 through 22.

24. The shape-imparted product as claimed in claim 23, which is selected from the group consisting of fibers, yarns, films, tapes, hollow products, and multi-layer structures.

25. An object comprising a shape-imparted product as claimed in claim 23 or 24 and selected from the group consisting of building materials for interior furnishings and exterior finish, machinery, exterior and interior decor materials for automobiles, glass products, electric appliances, agricultural materials, electronic apparatus, tools, tableware, bath products, toiletry products, furniture, clothing, woven fabrics, non-woven fabrics, cloth products, leather products, paper products, sporting goods, futon, containers, eyeglasses, signboards, piping, wiring, brackets, sanitary materials, automobile parts, outdoor goods such as tents, panty hose, socks, gloves, and masks.

26. The cosmetic material comprising the powder comprising silica-coated zinc oxide fined particles as claimed in any one of claims 1 through 19.

27. A process for producing silica-coated zinc oxide fine particles according to claim 1, comprising the steps of:

bringing a composition for forming silica coating into contact with raw material zinc oxide particles whose primary particles have an average particle size of 5nm to 200nm, wherein the composition for forming silica coating contains at least the following compositions:

1) silicic acid containing neither an organic group nor a halogen, or a precursor capable of producing such silicic acid,
2) water,
3) an alkali, and
4) an organic solvent,

whereby surfaces of the zinc oxide particles are selectively coated with a silica coating, and
subjecting the obtained silica-coated zinc oxide particles to a dry-format classification to reduce the number of large particles.

28. The process according to claim 27, wherein said composition for forming silica coating has water/organic solvent ratio by volume falls within a range of 0.1 to 10 and a silicon content falling within a range of 0.001 to 5 mol/L.

29. A process for producing surface-hydrophobicized silica-coated zinc oxide fine particles according to claim 2, comprising the steps of:

bringing a composition for forming silica coating into contact with raw material zinc oxide particles whose primary particles have an average particle size of 5nm to 200nm, wherein the composition for forming silica coating contains at least the following compositions:

1) silicic acid containing neither an organic group nor a halogen, or a precursor capable of producing such silicic acid,
2) water,
3) an alkali, and
4) an organic solvent,

whereby surfaces of the zinc oxide particles are selectively coated with a silica coating,
subjecting the produced silica-coated zinc oxide particles to surface treatment with a hydrophobicity-imparting agent to obtain surface-hydrophobicized silica-coated zinc oxide particles, and
subjecting the obtained surface-hydrophobicized silica-coated zinc oxide particles to a dry-format classification to reduce the number of large particles.

**30.** The process according to claim 29, wherein said composition for forming silica coating has water/organic solvent ratio by volume falls within a range of 0.1 to 10 and a silicon content falling within a range of 0.001 to 5 mol/L.

**Patentansprüche**

**1.** Pulver, enthaltend feine, Siliciumdioxid-beschichtete Oxidteilchen, wobei die Oberfläche jedes Teilchens mit Siliciumdioxid beschichtet ist, wobei große Teilchen von 5 $\mu$m oder mehr 0,1 Massen-% oder weniger ausmachen, und wobei die Anzahl großer Teilchen mittels Trockenklassifizierung vermindert wurde.

**2.** Pulver, enthaltend feine, Oberflächenhydrophobizierte, Siliciumdioxid-beschichtete Zinkoxidteilchen, wobei die feinen, Siliciumdioxid-beschichteten Zinkoxidteilchen, deren Oberflächen mit Siliciumdioxid beschichtet worden waren, weiter mit einem Hydrophobizität-verleihenden Mittel behandelt sind, wobei große Teilchen von 5 $\mu$m oder mehr 0,1 Massen-% oder weniger ausmachen, und wobei die Anzahl großer Teilchen mittels Trockenklassifizierung vermindert wurde.

**3.** Pulver nach Anspruch 2, worin das Hydrophobizitätverleihende Mittel eines oder mehrere ist/sind, ausgewählt aus der Gruppe, bestehend aus Siliconölen, Alkoxysilanen, Silankupplungsmitteln und Salzen höherer Fettsäuren.

**4.** Pulver nach einem der Ansprüche 1 bis 3, wobei die feinen, Siliciumdioxid-beschichteten Zinkoxidteilchen eine Siliciumdioxidbeschichtung mit einer Dicke von 0,5 bis 100 nm (bestimmt mittels TEM) aufweisen.

**5.** Pulver nach einem der Ansprüche 1 bis 4, wobei die feinen, Siliciumdioxid-beschichteten Zinkoxidteilchen eine durchschnittliche Primärteilchengröße von 1 bis 200 nm (bestimmt mittels TEM) aufweisen.

**6.** Pulver nach Anspruch 2 oder 3, worin die feinen, Oberflächen-hydrophobizierten, Siliciumdioxid-beschichteten Zinkoxidteilchen eine durchschnittliche Primärteilchengröße von 5 bis 120 nm und eine Siliciumdioxidfilmdicke von 0,5 bis 25 nm aufweisen.

**7.** Pulver nach einem der Ansprüche 1 bis 6, worin das Verhältnis I der Infrarotabsorptionspeakintensität des Siliciumdioxidfilms der feinen, Siliciumdioxid-beschichteten Zinkoxidteilchen bei 1150 bis 1250 cm$^{-1}$ zu derjenigen bei 1000 bis 1100 cm$^{-1}$, bestimmt anhand eines Infrarotabsorptionsspektrums, 0,2 oder mehr ist (I=I1/I2; worin I1 die Absorptionspeakintensität bei 1150 bis 1250 cm$^{-1}$ bedeutet und I2 die Absorptionspeakintensität bei 1000 bis 1100 cm$^{-1}$ bedeutet), und der Siliciumdioxidfilm einen Brechungsindex von 1,435 oder mehr aufweist.

**8.** Pulver nach einem der Ansprüche 1 bis 7, worin das Pulver eine fotokatalytische Aktivität von 60 Pa/min oder weniger aufweist, gemessen mittels des Tetralin-Autooxidationsverfahrens.

**9.** Pulver nach einem der Ansprüche 1 bis 8, worin das Pulver eine Farbstoffverblassungsrate ($\Delta ABS_{490}$/Stunde) von 0,1 oder weniger aufweist, gemessen mittels des Sunset yellow-Verfahrens.

**10.** Pulver nach einem der Ansprüche 1 bis 9, worin das Pulver eine Zersetzungsrate organischen UV-Absorbers ($\Delta ABS_{340}$/Stunde) von 0,01 oder weniger aufweist, gemessen mittels des Parasol 1789-Verfahrens.

**11.** Pulver nach einem der Ansprüche 1 bis 10, worin das Pulver eine prozentuale Zersetzung organischen UV-Absorbers von 5 % oder weniger aufweist, gemessen mittels des Ethylhexyl-p-methoxycinnamat-Verfahrens.

**12.** Pulver, welches feine, Siliciumdioxid-beschichtete Zinkoxidteilchen enthält, nach einem der Ansprüche 1 bis 11, welches Titanoxid enthält.

**13.** Pulver, umfassend feine, Siliciumdioxid-beschichtete Zinkoxidteilchen, nach Anspruch 12, worin weiterhin Titanoxid in einer Menge von 2 Massenteilen auf 5 Massenteile enthalten ist, bezogen auf 10 Massenteile Zinkoxid.

**14.** Pulver, umfassend feine, Siliciumdioxid-beschichtete Zinkoxidteilchen, nach Anspruch 12 oder 13, wobei mindestens ein Teil des Titanoxids mit Siliciumdioxid beschichtet ist.

**15.** Pulver, umfassend feine, Siliciumdioxid-beschichtete Zinkoxidteilchen, nach einem der Ansprüche 12 bis 14, wobei das Titanoxid einen Mischkristall mit einer Titan-Sauerstoff-Silicium-Bindung in seinen Primärteilchen enthält.

**16.** Pulver, umfassend feine, Siliciumdioxid-beschichtete Zinkoxidteilchen, nach Anspruch 15, wobei, wenn der spezifische Oberflächenbereich nach BET von Titanoxid durch "A $m^2/g$" dargestellt wird und der $SiO_2$-Gehalt durch "B Massen-%" dargestellt wird, das Verhältnis von B/A von 0,02 bis 0,5 beträgt.

**17.** Pulver, umfassend feine, Siliciumdioxid-beschichtete Zinkoxidteilchen, nach Anspruch 15 oder 16, wobei der spezifische Oberflächenbereich nach BET des Titanoxids von 10 bis 200 $m^2/g$ ist.

**18.** Pulver, umfassend feine, Siliciumdioxid-beschichtete Zinkoxidteilchen, nach einem der Ansprüche 15 bis 17, wobei die durchschnittliche Primärteilchengröße des Titanoxids 0,008 $\mu$m bis 0,15 $\mu$m ist.

**19.** Pulver, umfassend feine, Siliciumdioxid-beschichtete Zinkoxidteilchen, nach einem der Ansprüche 15 bis 18, wobei das Titanoxid eine Kern(Nukleus)/Mantel(Hülse)-Struktur aufweist, wobei der Kern eine $TiO_2$-reiche Struktur ist, und der Mantel eine $SiO_2$-reiche Struktur ist.

**20.** Organische Polymerzusammensetzung, enthaltend ein Pulver, umfassend feine, Siliciumdioxid-beschichtete Zinkoxidteilchen, nach einem der Ansprüche 1 bis 19, sowie ein thermoplastisches Harz.

**21.** Organische Polymerzusammensetzung, weitgehend bestehend aus einem Pulver nach einem der Ansprüche 1 bis 19, umfassend feine, Siliciumdioxid-beschichtete Zinkoxidteilchen, sowie ein thermoplastisches Harz.

**22.** Organische Polymerzusammensetzung nach Anspruch 20 oder 21, worin das thermoplastische Harz aus der Gruppe ausgewählt ist, bestehend aus Polyethylenen, Polypropylenen, Polystyrolen, Polyamidem, Polyesterm und Polycarbonaten.

**23.** Gestaltetes Produkt aus einer organischen Polymerzusammensetzung nach einem der Ansprüche 20 bis 22.

**24.** Gestaltetes Produkt nach Anspruch 23, ausgewählt aus der Gruppe, bestehend aus Fasern, Fäden, Filmen/Folien, Bändern/Tapes, Hohlprodukten und Mehrschichtstrukturen.

**25.** Gegenstand, umfassend ein gestaltetes Produkt nach Anspruch 23 oder 24, ausgewählt aus der Gruppe, bestehend aus Baumaterialien für Inneneinrichtungen und Außenanstriche, Maschinen, äußeren und inneren Ziermaterialien für Fahrzeuge, Glasprodukten, elektrischen Anwendungen, landwirtschaftlichen Materialien, elektronischen Apparaten, Werkzeugen, Geschirr, Badprodukten, Toilettenartikeln, Möbeln, Kleidung, Gewebe, Vliesen, Tuchprodukten, Lederprodukten, Papierprodukten, Sportartikeln, Futons, Behältern, Brillengläsern, Schildern, Rohrleitungen, Verdrahtungen, Ausleger- bzw. Befestigungsarmen, Sanitärmaterialien, Automobilteilen, Outdoorgegenständen, wie Zelte, Strumpfhosen, Strümpfen, Handschuhen und Masken.

**26.** Kosmetisches Material, umfassend das feine, Siliciumdioxid-beschichtete Zinkoxidteilchen enthaltende Pulver nach einem der Ansprüche 1 bis 19.

**27.** Verfahren zur Herstellung feiner Siliciumdioxid-beschichteter Zinkoxidteilchen nach Anspruch 1, mit den Schritten:

Inkontaktbringen einer Zusammensetzung zur Bildung einer Siliciumdioxidbeschichtung mit Zinkoxidrohmaterialteilchen, deren Primärteilchen eine durchschnittliche Teilchengröße von 5 nm bis 200 nm aufweisen, wobei die Zusammensetzung zur Bildung einer Siliciumdioxidbeschichtung mindestens die folgenden Zusammensetzungen beinhaltet:

1) Kieselsäure, die weder eine organische Gruppe noch ein Halogen enthält, oder einen zur Erzeugung einer solchen Kieselsäure befähigten Vorläufer,
2) Wasser,
3) ein Alkali, und
4) ein organisches Lösungsmittel,

wobei Oberflächen der Zinkoxidteilchen selektiv mit einer Siliciumdioxidbeschichtung beschichtet werden, und Unterziehen der erhaltenen Siliciumdioxid-beschichteten Zinkoxidteilchen einer Trockenklassifizierung, um die Zahl großer Teilchen zu verringern.

28. Verfahren nach Anspruch 27, wobei die Zusammensetzung zur Bildung einer Siliciumdioxidbeschichtung ein Volumenverhältnis von Wasser/organischem Lösungsmittel aufweist, welches in einen Bereich von 0,1 bis 10 fällt, und einen Siliciumgehalt, der in einen Bereich von 0,001 bis 5 mol/L fällt.

29. Verfahren zur Herstellung feiner, Oberflächenhydrophobizierter, Siliciumdioxid-beschichteter Zinkoxidteilchen nach Anspruch 2, mit den Schritten:

Inkontaktbringen einer Zusammensetzung zur Bildung einer Siliciumdioxidbeschichtung mit Zinkoxidrohmaterialteilchen, deren Primärteilchen eine durchschnittliche Teilchengröße von 5 nm bis 200 nm aufweisen, wobei die Zusammensetzung zur Bildung einer Siliciumdioxidbeschichtung mindestens die folgenden Zusammensetzungen beinhaltet:

1) Kieselsäure, die weder eine organische Gruppe noch ein Halogen enthält, oder einen zur Erzeugung einer solchen Kieselsäure befähigten Vorläufer,
2) Wasser,
3) ein Alkali, und
4) ein organisches Lösungsmittel,

wobei Oberflächen der Zinkoxidteilchen selektiv mit einer Siliciumdioxidbeschichtung beschichtet werden, und Unterziehen der erhaltenen Siliciumdioxid-beschichteten Zinkoxidteilchen einer Oberflächenbehandlung mit einem Hydrophobizität-verleihenden Mittel, um oberflächenhydrophobizierte, Siliciumdioxid-beschichtete Zinkoxidteilchen zu erhalten, und
Unterziehen der erhaltenen oberflächenhydrophobizierten, Siliciumdioxid-beschichteten Zinkoxidteilchen einer Trockenklassifizierung, um die Anzahl großer Teilchen zu verringern.

30. Verfahren nach Anspruch 29, wobei die Zusammensetzung zur Bildung einer Siliciumdioxidbeschichtung ein Volumenverhältnis von Wasser/organischem Lösungsmittel aufweist, welches in einen Bereich von 0,1 bis 10 fällt, und einen Siliciumgehalt, der in einen Bereich von 0,001 bis 5 mol/L fällt.

**Revendications**

1. Poudre comprenant des particules fines d'oxyde de zinc enrobées de silice dans laquelle la surface de chaque particule est enrobée de silice, dans laquelle les grosses particules de 5 $\mu$m ou plus représentent 0,1 % en poids ou moins et dans laquelle le nombre de grosses particules a été réduit par une classification sous forme sèche.

2. Poudre comprenant des particules fines d'oxyde de zinc enrobées de silice rendues hydrophobes en surface dans laquelle les particules fines d'oxyde de zinc enrobées de silice dont les surfaces ont été enrobées de silice sont en outre traitées avec un agent offrant une hydrophobicité, dans laquelle les grosses particules de 5 $\mu$m ou plus représentent 0,1 % en poids ou moins et dans laquelle le nombre de grosses particules a été réduit par une classification sous forme sèche.

3. Poudre selon la revendication 2, dans laquelle l'agent offrant une hydrophobicité est un ou plusieurs éléments choisis dans le groupe constitué par les huiles de silicone, les alcoxysilanes, les agents de couplage de silane et les sels d'acides gras supérieurs.

4. Poudre selon l'une quelconque des revendications 1 à 3, dans laquelle les particules fines d'oxyde de zinc enrobées de silice ont un enrobage de silice de 0,5 à 100 nm en termes d'épaisseur (déterminé par TEM).

5. Poudre selon l'une quelconque des revendications 1 à 4, dans laquelle les particules fines d'oxyde de zinc enrobées de silice ont une taille de particules principales moyenne de 1 à 200 nm (déterminée par TEM).

6. Poudre selon la revendication 2 ou 3, dans laquelle les particules fines d'oxyde de zinc enrobées de silice rendues hydrophobes en surface ont une taille de particules principales moyenne de 5 à 120 nm et une épaisseur de film de silice de 0,5 à 25 nm.

7. Poudre selon l'une quelconque des revendications 1 à 6, dans laquelle le rapport I de l'intensité de pic d'absorption infrarouge du film de silice des particules fines d'oxyde de zinc enrobées de silice à 1150 à 1250 cm$^{-1}$ à celle à 1000 à 1100 cm$^{-1}$, comme déterminé sur un spectre d'absorption infrarouge, est supérieur ou égal à 0,2 (I = I1/I2 ; où I1 représente une intensité de pic d'absorption infrarouge à 1150 à 1250 cm$^{-1}$ et I2 représente une intensité de pic d'absorption infrarouge à 1000 à 1100 cm$^{-1}$), et le film de silice a un indice de réfraction supérieur ou égal à 1,435.

8. Poudre selon l'une quelconque des revendications 1 à 7, dans laquelle la poudre montre une activité photocatalytique inférieure ou égale à 60 Pa/minute, comme mesuré par la méthode d'autooxydation de la tétraline.

9. Poudre selon l'une quelconque des revendications 1 à 8, dans laquelle la poudre montre un taux de dégradation de couleur du colorant ($\Delta ABS_{490}$/heure) inférieur ou égal à 0,1, comme mesuré par la méthode du jaune soleil.

10. Poudre selon l'une quelconque des revendications 1 à 9, dans laquelle la poudre montre un taux de décomposition de l'absorbeur d'UV organiques ($\Delta ABS_{340}$/heure) inférieur ou égal à 0,01, comme mesuré par la méthode Parasol 1789.

11. Poudre selon l'une quelconque des revendications 1 à 10, dans laquelle la poudre montre un pourcentage de décomposition de l'absorbeur d'UV organiques inférieur ou égal à 5 %, comme mesuré par la méthode du p-méthoxycinnamate d'éthylhexyle.

12. Poudre comprenant des particules fines d'oxyde de zinc enrobées de silice selon l'une quelconque des revendications 1 à 11, qui comprend de l'oxyde de titane.

13. Poudre comprenant des particules fines d'oxyde de zinc enrobées de silice selon la revendication 12, dans laquelle de l'oxyde de titane en une quantité de 2 parties en poids à 5 parties en poids est en outre présent, sur la base de 10 parties en poids d'oxyde de zinc.

14. Poudre comprenant des particules fines d'oxyde de zinc enrobées de silice selon la revendication 12 ou 13, dans laquelle au moins une partie de l'oxyde de titane est enrobée de silice.

15. Poudre comprenant des particules fines d'oxyde de zinc enrobées de silice selon l'une quelconque des revendications 12 à 14, dans laquelle l'oxyde de titane comprend un cristal mixte comprenant une liaison titane-oxygène-silicium dans ses particules principales.

16. Poudre comprenant des particules fines d'oxyde de zinc enrobées de silice selon la revendication 15, dans laquelle lorsque la surface spécifique BET de l'oxyde de titane est représentée par « A m$^2$/g » et la teneur en SiO$_2$ est représentée par « B % en masse », le rapport B/A est de 0,02 à 0,5.

17. Poudre comprenant des particules fines d'oxyde de zinc enrobées de silice selon la revendication 15 ou 16, dans laquelle la surface spécifique BET de l'oxyde de titane est de 10 à 200 m$^2$/g.

18. Poudre comprenant des particules fines d'oxyde de zinc enrobées de silice selon l'une quelconque des revendications 15 à 17, dans laquelle la taille de particules principales moyenne d'oxyde de titane est de 0,008 $\mu$m à 0,15 $\mu$m.

19. Poudre comprenant des particules fines d'oxyde de zinc enrobées de silice selon l'une quelconque des revendications 15 à 18, dans laquelle l'oxyde de titane comprend une structure coeur (un noyau)/écorce (une enveloppe), le coeur étant une structure riche en TiO$_2$ et l'écorce étant une structure riche en SiO$_2$.

20. Composition polymère organique comprenant une poudre comprenant des particules fines d'oxyde de zinc enrobées de silice selon l'une quelconque des revendications 1 à 19, et une résine thermoplastique.

21. Composition polymère organique essentiellement constituée d'une poudre comprenant des particules fines d'oxyde de zinc enrobées de silice selon l'une quelconque des revendications 1 à 19, et une résine thermoplastique.

22. Composition polymère organique selon la revendication 20 ou 21, dans laquelle la résine thermoplastique est choisie dans le groupe constitué par les polyéthylènes, les polypropylènes, les polystyrènes, les polyamides, les polyesters et les polycarbonates.

**23.** Produit prenant une forme d'une composition polymère organique selon l'une quelconque des revendications 20 à 22.

**24.** Produit prenant une forme selon la revendication 23, qui est choisi dans le groupe constitué par les fibres, les fils, les films, les rubans, les produits creux et les structures multicouches.

**25.** Objet comprenant un produit prenant une forme selon la revendication 23 ou 24 et choisi dans le groupe constitué par les matériaux de construction pour l'ameublement intérieur et les finitions extérieures, les machines, les matériaux de décor intérieur et extérieur pour les automobiles, les produits en verre, les appareils électriques, les matériaux agricoles, les appareils électroniques, les outils, la vaisselle, les produits pour le bain, les produits d'hygiène, les meubles, les vêtements, les tissus tissés, les tissus non tissés, les produits en tissu, les produits en cuir, les produits en papier, les équipements sportifs, les futons, les contenants, les verres pour lunette, les panneaux d'affichage, les conduits, les câbles, les fixations, les matériaux sanitaires, les parties automobiles, les équipements de plein air tels que les tentes, les collants, les chaussettes, les gants et les masques.

**26.** Matériau cosmétique comprenant la poudre comprenant des particules fines d'oxyde de zinc enrobées de silice selon l'une quelconque des revendications 1 à 19.

**27.** Procédé de production de particules fines d'oxyde de zinc enrobées de silice selon la revendication 1, comprenant les étapes consistant à :

mettre en contact une composition pour former l'enrobage de silice avec des particules d'oxyde de zinc brutes dont les particules principales ont une taille de particules moyenne de 5 nm à 200 nm, la composition pour former l'enrobage de silice comprenant au moins les compositions suivantes :

1) de l'acide silicique ne contenant ni groupe organique ni halogène, ou un précurseur pouvant produire un tel acide silicique,
2) de l'eau,
3) un composé alcalin, et
4) un solvant organique,

les surfaces des particules d'oxyde de zinc étant sélectivement enrobées d'un enrobage de silice, et
soumettre les particules d'oxyde de zinc enrobées de silice obtenues à une classification sous forme sèche pour réduire le nombre de grosses particules.

**28.** Procédé selon la revendication 27, dans lequel ladite composition pour former l'enrobage de silice a un rapport en volume eau/solvant organique compris dans la plage allant de 0,1 à 10 et une teneur en silicium comprise dans la plage allant de 0,001 à 5 mol/l.

**29.** Procédé de production de particules fines d'oxyde de zinc enrobées de silice rendues hydrophobes en surface selon la revendication 2, comprenant les étapes consistant à :

mettre en contact une composition pour former l'enrobage de silice avec des particules d'oxyde de zinc brutes dont les particules principales ont une taille de particules moyenne de 5 nm à 200 nm, la composition pour former l'enrobage de silice comprenant au moins les compositions suivantes :

1) de l'acide silicique ne contenant ni groupe organique ni halogène, ou un précurseur pouvant produire un tel acide silicique,
2) de l'eau,
3) un composé alcalin, et
4) un solvant organique,

les surfaces des particules d'oxyde de zinc étant sélectivement enrobées d'un enrobage de silice,
soumettre les particules d'oxyde de zinc enrobées de silice produites à un traitement en surface avec un agent offrant une hydrophobicité pour obtenir des particules fines d'oxyde de zinc enrobées de silice rendues hydrophobes en surface, et
soumettre les particules d'oxyde de zinc enrobées de silice rendues hydrophobes en surface obtenues à une classification sous forme sèche pour réduire le nombre de grosses particules.

30. Procédé selon la revendication 29, dans lequel ladite composition pour former un enrobage de silice a un rapport en volume eau/solvant organique compris dans la plage allant de 0,1 à 10 et une teneur en silicium comprise dans la plage allant de 0,001 à 5 mol/l.

**EP 1 511 802 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5171130 A
- JP 5295141 A
- JP 11302015 A
- JP 2501663 B
- WO 9006974 A
- WO 9847476 A
- WO 0156930 A

### Non-patent literature cited in the description

- **Kyoritsu Shuppan K.K.** Encyclopaedia Chimica. 15 March 1969
- **Kiichiro KUBO et al.** *Powders,* 1979, 56-66
- **C. Jeffery Brinker.** Sol-Gel Science. Academic Press, 1990, 581-583
- **Manabu KIYONO.** Titanium oxide - Physical Properties and Application Techniques. Giho-do, 1991, 196-197
- Titanium Oxide - Physical Properties and Application Techniques. Manabu KIYONO. GIHODO SHUPPAN, 1991, 196-197